# EUROPEAN PATENT SPECIFICATION

(11) **EP 3 836 701 B1**
(45) Date of publication and mention of the grant of the patent: **20.11.2024**
(21) Application number: 18929100.8
(22) Date of filing: 10.08.2018
(51) Int. Cl.: H04L 5/00

(54) **USER TERMINAL**
BENUTZERAUSRÜSTUNG
ÉQUIPEMENT D'UTILISATEUR

(43) Date of publication of application: 16.06.2021
(73) Proprietor: NTT DOCOMO, INC., Chiyoda-ku Tokyo 100-6150 (JP)
(72) Inventor: YOSHIOKA, Shohei, Tokyo 100-6150 (JP); TAKEDA, Kazuki, Tokyo 100-6150 (JP); NAGATA, Satoshi, Tokyo 100-6150 (JP)
(74) Representative: Hoffmann Eitle
(86) International application number: PCT/JP2018/030157
(87) International publication number: WO 2020/031390

(56) References cited:
- ZTE: "Remaining issues for multiplexing UCI on PUSCH", vol. RAN WG1, no. Busan, Korea; 20180521 - 20180525, 20 May 2018 (2018-05-20), XP051441343, Retrieved from the Internet <URL:http://www.3gpp.org/ftp/Meetings%5F3GPP%5FSYNC/RAN1/Docs/> [retrieved on 20180520]
- SPREADTRUM COMMUNICATIONS: "Remaining issues on UCI multiplexing", vol. RAN WG1, no. Busan, Korea; 20180521 - 20180525, 12 May 2018 (2018-05-12), XP051462524, Retrieved from the Internet <URL:http://www.3gpp.org/ftp/tsg%5Fran/WG1%5FRL1/TSGR1%5F93/Docs> [retrieved on 20180512]
- ZTE: "Remaining issues for multiplexing UCI on PUSCH", 3GPP TSG RAN WG1 #93 R1-1806133, vol. RAN WG1, 25 May 2018 (2018-05-25), XP051441343
- CATT: "Considerations on UCI multiplexing for NR UTLLC", 3GPP TSG RAN WG1 #93 R1-1806297, 25 May 2018 (2018-05-25), XP051441504

## Description

### Technical Field

The present disclosure relates to a user terminal in a next-generation mobile communication system.

### Background Art

In the universal mobile telecommunications system (UMTS) network, the specifications of long-term evolution (LTE) have been drafted for the purpose of further increasing high speed data rates, providing lower delays and so on (see Non-Patent Literature 1). Further, the specifications of LTE Advanced (LTE-A, LTE Rel. 10, 11, 12, 13) have been made for the purpose of further increasing the capacity and advancement of LTE (LTE Rel. 8, 9).

Successor systems of LTE (for example, Future Radio Access (FRA), 5th generation mobile communication system (5G), 5G+ (plus), New Radio (NR), New radio access (NX), Future generation radio access (FX), LTE Rel. 14 or 15 or later versions) are also under study.

In the existing LTE system (for example, LTE Rel. 8-14), a user terminal (user equipment (UE)) controls reception of a downlink shared channel (for example, a physical downlink shared channel (PDSCH)) based on downlink control information (downlink control information (DCI), also referred to as DL assignment or the like) transmitted via a downlink control channel (for example, a physical downlink control channel (PDCCH)). Also, the user terminal controls transmission of the uplink shared channel (for example, a physical uplink shared channel (PUSCH)) based on the DCI (also referred to as uplink (UL) grant or the like).

Further, in the existing LTE system, the user terminal transmits uplink control information (UCI) by using an uplink control channel (for example, a physical uplink control channel (PUCCH)) or an uplink shared channel.

The UCI may include at least one of delivery acknowledgement information (hybrid automatic repeat request-acknowledge (HARQ-ACK), acknowledge/non-ack (ACK/NACK)), scheduling request (SR), and channel state information (CSI) for downlink shared channels.

Non-Patent Literature 2 discusses open issues for multiplexing UCI on PUSCH and proposes methods for controlling a user equipment in cases in which single-slot PUCCH overlaps with single-slot PUCCH/PUSCH in the same slot.

Non-Patent Literature 3 discusses considerations on how to multiplex different types of UCI on PUCCH and PUSCH when the starting symbols among UL transmissions are different.

### Citation List

### Non Patent Literature

Non Patent Literature 1: 3GPP TS 36.300 V8.12.0 "Evolved Universal Terrestrial Radio Access (E-UTRA) and Evolved Universal Terrestrial Radio Access Network (E-UTRAN); Overall description; Stage 2 (Release 8)", April, 2010
Non-Patent Literature 2: ZTE: "Remaining issues for multiplexing UCI on PUSCH", R1-1806133, 20 May 2018
Non-Patent Literature 3: SPREADTRUM COMMUNICATIONS: "Remaining issues on UCI multiplexing", R1-1806401, 12 May 2018

### Summary of Invention

### Technical Problem

In a future radio communication system (hereinafter, also referred to as NR), when one or more uplink control channels (for example, PUCCHs) and an uplink shared channel (for example, PUSCH) collide in the same slot, the one or more uplink control channels are expected to be multiplexed into the uplink shared channel. Further, when a plurality of uplink control channels collides in the same slot, it is assumed that the plurality of uplink control channels is multiplexed into a single uplink control channel.

Thus, when a plurality of uplink channels (for example, one or more PUCCHs and a PUSCH, or a plurality of PUCCHs) collides in the same slot, it is possible that transmission of at least one of the UCI and uplink data cannot be properly controlled by just multiplexing the plurality of uplink channels into a single uplink channel. This is because, for example, it is also assumed that at least one of the UCI (for example, HARQ-ACK) and the PUSCH occurs in the same slot after multiplexing the plurality of uplink channels into a single uplink channel.

Accordingly, one of objects of the present disclosure is to provide a user terminal capable of appropriately operating (behaving) when a plurality of uplink channels collides in the same slot.

### Solution to Problem

The reader is referred to the appended independent claims. Some preferred features are laid out in the dependent claims.

### Advantageous Effects of Invention

According to one aspect of the present disclosure, a user terminal can operate appropriately even when a plurality of uplink channels collides in the same slot.

### Brief Description of Drawings

Figs. 1A and 1B are diagrams illustrating examples of timeline requirements in NR.
Figs. 2A to 2C are diagrams illustrating examples of parameters used for controlling HARQ-ACK timing.
Figs. 3A to 3C are diagrams illustrating examples of parameters used for controlling PUSCH timing.
Figs. 4A and 4B are diagrams illustrating examples of user operations when a plurality of uplink channels collides in the same slot.
Figs. 5A to 5C are diagrams illustrating examples of user terminal operations at a time of a collision of uplink channels according to a first aspect.
Figs. 6A and 6B are diagrams illustrating examples of user terminal operations at a time of a collision of uplink channels according to a second aspect.
Figs. 7A and 7B are diagrams illustrating other examples of user terminal operations at a time of a collision of uplink channels according to the second aspect.
Figs. 8A and 8B are diagrams illustrating examples of user terminal operations at a time of a collision of uplink channels according to a third aspect.
Figs. 9A and 9B are diagrams illustrating examples of user terminal operations at a time of a collision of uplink channels according to a fourth aspect.
Figs. 10A and 10B are diagrams illustrating examples of user terminal operations at a time of a collision of uplink channels according to a fifth aspect.
Fig. 11 is a diagram illustrating an example of a schematic configuration of a radio communication system according to the present embodiment.
Fig. 12 is a diagram illustrating an example of an overall configuration of a base station according to the present embodiment.
Fig. 13 is a diagram illustrating an example of a functional configuration of the base station according to the present embodiment.
Fig. 14 is a diagram illustrating an example of an overall configuration of a user terminal according to the present embodiment.
Fig. 15 is a diagram illustrating an example of a functional configuration of the user terminal according to the present embodiment.
Fig. 16 is a diagram illustrating an example of a hardware configuration of the base station and the user terminal according to the present embodiment.

### Description of Embodiments

### (Timeline requirement)

In the NR, timing of feeding back (transmitting) a HARQ-ACK for a PDSCH (also called HARQ-ACK timing, HARQ-ACK feedback timing, HARQ-ACK transmission timing, or the like), and timing of transmitting a PUSCH scheduled by DCI (also called PUSCH timing, PUSCH transmission timing, or the like) are defined as timeline requirements.

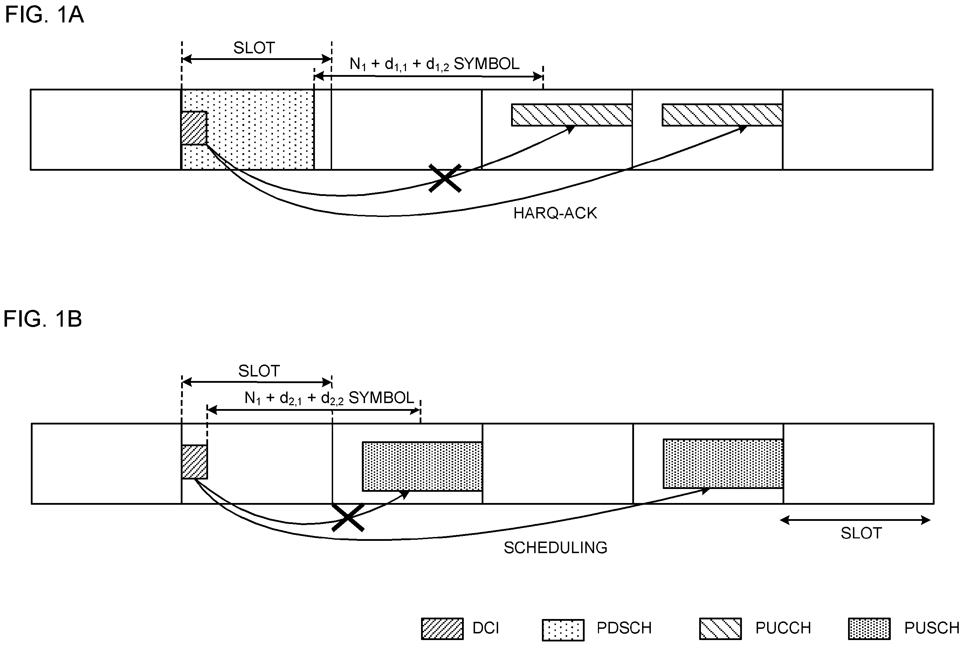

Figs. 1A and 1B are diagrams illustrating examples of the timeline requirements in the NR. Fig. 1A illustrates an example of the HARQ-ACK timing when a PUCCH and a PUSCH do not collide in the same slot. As illustrated in Fig. 1A, the HARQ-ACK for the PDSCH may be fed back using a PUCCH after a given period with reference to a final symbol of the PDSCH (or a symbol following the final symbol). For example, in Fig. 1A, the given period is the N₁ + d_{1,1} + d_{1,2} symbol.

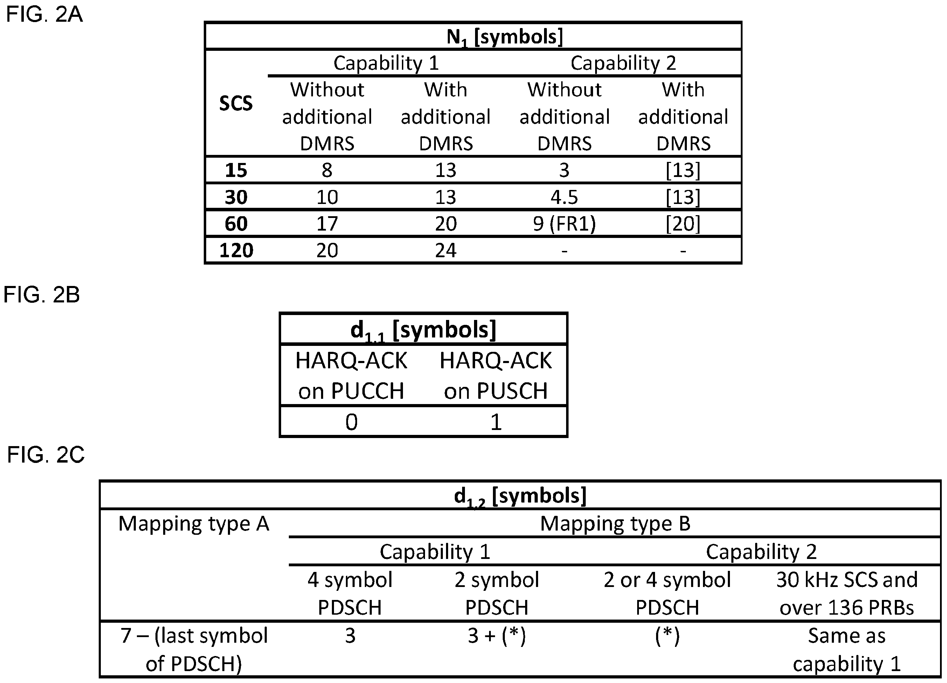

Here, N₁ is the number of symbols determined based on at least one of the following parameters (for example, Fig. 2A).
- Type of processing capability (UE processing capability, capability) related to a processing time of the PDSCH of the user terminal (for example, 1 or 2)
- Subcarrier spacing (SCS)
- Whether or not there is addition of a demodulation reference signal (DMRS) of a PDSCH (whether there is additional DMRS)
- Frequency range

Further, d_{1,1} is the number of symbols determined based on whether the HARQ-ACK is fed back using the PUCCH or the PUSCH (for example, Fig. 2B).

Further, d_{1,2} is the number of symbols determined based on at least one of the following parameters (for example, Fig. 2C).
- UE processing capacity (capacity) type (for example, 1 or 2)
- PDSCH mapping type (for example, A or B)
- Number of symbols assigned to PDSCH (for example, two or four symbols)
- Resource block (RB) scheduled in PDSCH (also called physical resource block (PRB) or the like)

For example, in Fig. 1A, the HARQ-ACK of the PDSCH is not fed back in the PUCCH starting before the N₁ + d_{1,1} + d_{1,2} symbol from the symbol following the final symbol of the PDSCH. On the other hand, the HARQ-ACK of the PDSCH is fed back using the PUCCH starting after the N₁ + d_{1,1} + d_{1,2} symbol from the following symbol.

Fig. 1B illustrates an example of the PUSCH timing when the PUCCH and the PUSCH do not collide in the same slot. As illustrated in Fig. 1B, a PUSCH scheduled by the DCI (for example, DCI format 0_0 or 0_1, UL grant) may be transmitted after a given period of time with reference to the final symbol of the DCI (or the symbol following the final symbol). For example, in Fig. 1B, the given period is the N₂ + d_{2,1} + d_{2,2} symbol.

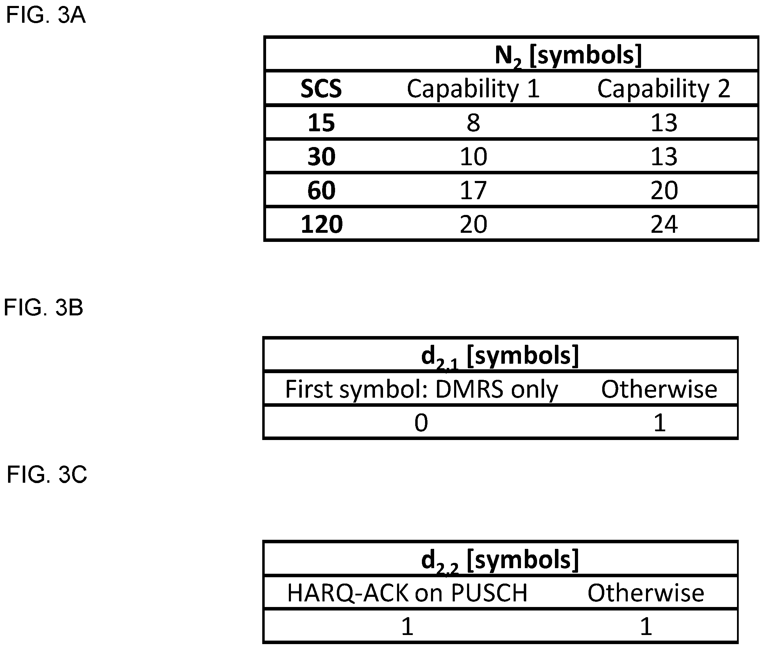

Here, N₂ is the number of symbols determined based on at least one of the type (for example, 1 or 2) of the ability (PUSCH timing ability) related to a preparation time of the PUSCH transmission and the subcarrier spacing (SCS) (for example, Fig. 3A). Further, d_{2,1} is the number of symbols determined based on whether or not the first symbol assigned to the PUSCH is constituted only of the DMRS of the PUSCH (for example, Fig. 3B). Further, d_{2,2} is the number of symbols determined based on whether or not the HARQ-ACK is multiplexed into the PUSCH (for example, Fig. 3C).

For example, in Fig. 1B, the PUSCH cannot be transmitted before the N₂ + d_{2,1} + d_{2,2} symbol from the symbol following the final symbol of the DCI. The user terminal transmits the PUSCH scheduled by the DCI after the N₂ + d_{2,1} + d_{2,2} symbol from the following symbol.

Note that the values of N₁, d_{1,1}, d_{1,2}, N₂, d_{2,1}, and d_{2,2} illustrated in Figs. 2A to 2C and 3A to 3C are merely examples and are not limited to those illustrated. Also, the base station may notify the user terminal of at least one parameter used to determine N₁, d_{1,1}, d_{1,2}, N₂, d_{2,1}, d_{2,2} by at least one of higher layer signaling and physical layer signaling (for example, DCI).

Here, the higher layer signaling may be, for example, any of radio resource control (RRC) signaling, medium access control (MAC) signaling, broadcast information and so on, or a combination thereof.

For the MAC signaling, for example, a MAC control element (MAC CE), a MAC protocol data unit (PDU), or the like may be used. The broadcast information may be, for example, a master information block (MIB), a system information block (SIB), remaining minimum system information (RMSI), or the like.

### (Collision handling)

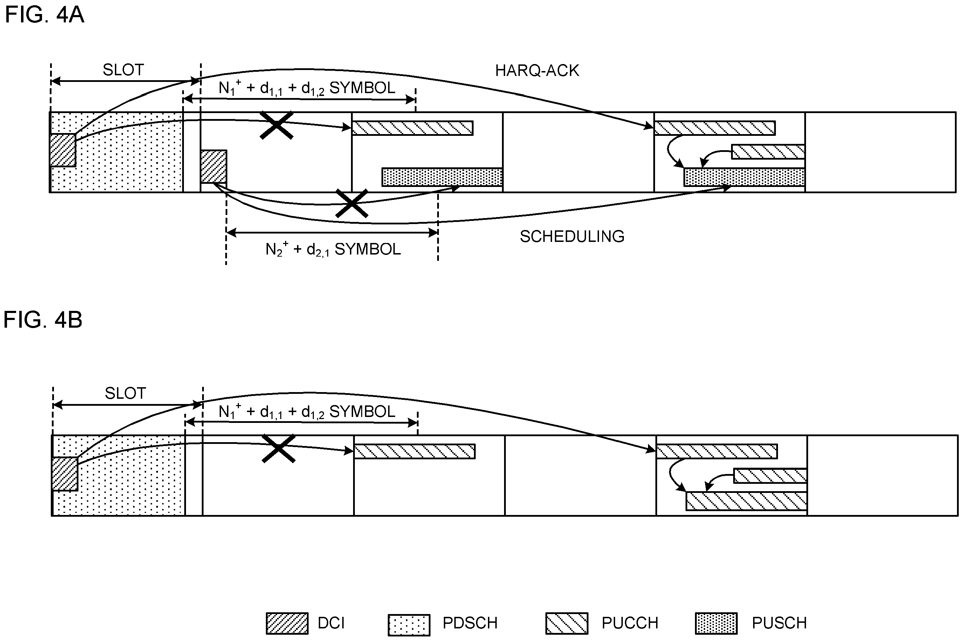

Figs. 4A and 4B are diagrams illustrating examples of user operations (UE behavior) when a plurality of uplink channels collides in the same slot. Fig. 4A illustrates an example in which one or more PUCCHs and a PUSCH collide in the same slot.

For example, in Fig. 4A, two PUCCHs and a PUSCH collide in the second slot from the right that satisfies a requirement for the HARQ-ACK timing and a requirement for the PUSCH timing. Note that the requirement for the HARQ-ACK timing when a collision occurs in the same slot may be, for example, N₁⁺ + d_{1,1} + d_{1,2}. Here, N₁⁺ = N1 + 1. Further, the requirement for the PUSCH timing when a collision occurs in the same slot may be, for example, N₂⁺ + d_{2,1}. Here, N₂⁺ = N2 + 1.

In the second slot from the right in Fig. 4A, a PUCCH that does not support the PDSCH (DCI) may be used for transmission of at least one of, for example, scheduling request (SR), periodic CSI (P-CSI), and semi-persistent CSI (SP-CSI). The cycle, resource, and the like of the P-CSI may be configured (notified) in the user terminal by higher layer signaling. The cycle, resource, and the like of the SP-CSI may be configured by higher layer signaling, and activation or de-activation of the cycle, resource, and the like may be controlled by the DCI.

As illustrated in Fig. 4A, when one or more PUCCHs and a PUSCH collide in the same slot, the UCI that will be transmitted on that one or more PUCCHs may be piggybacked on a single PUSCH (resource for that PUSCH).

Fig. 4B illustrates an example in which a plurality of PUCCHs collides in the same slot. For example, in Fig. 4B, three PUCCHs collide in the second slot from the right that satisfies the requirement for the HARQ-ACK timing and the requirement for the PUSCH timing. Each 2PUCCH that does not support the PDSCH (DCI) may support at least one of SR, P-CSI, and SP-CSI, as described above.

As illustrated in Fig. 4B, when a plurality of PUCCHs collides in the same slot, the HARQ-ACK may be multiplexed into at least one of SR and CSI (P-CSI or SP-CSI). For example, at least one of the HAQ-ACK and SR may be multiplexed into a single PUCCH (for example, PUCCH for CSI) (resource for the PUCCH).

As described above, in the NR, as long as the above timeline requirement (for example, at least one of the requirement for the HARQ-ACK timing and the requirement for the PUSCH timing) is satisfied, a collision of one or more PUCCHs and a PUSCH or a collision of one or more PUCCHs may occur in the same slot.

However, when a collision of one or more PUCCHs and a PUSCH occurs in the same slot, or a collision of a plurality of PUCCHs occurs in the same slot, it is possible that the UCI transmission cannot be properly controlled by just performing the above-mentioned collision handling.

For example, after multiplexing the UCI of one or more PUCCHs in a slot into a single PUSCH, or after multiplexing the UCI of a plurality of PUCCHs in a slot into a single PUCCH, it is expected that at least one of another HARQ-ACK and another PUSCH will be further overlap in that slot. In this case, the problem is how to process at least one of the other HARQ-ACK and the other PUSCH.

Therefore, the present inventors have studied user operations when an uplink channel collision occurs in the same slot, and have reached the present invention.

Hereinafter, the present embodiment will be described in detail with reference to the drawings. Note that this embodiment can be applied to both of a case where a collision of one or more PUCCHs and a PUSCH occurs in the same slot and a case where a collision of a plurality of PUCCHs occurs in the same slot.

In the present embodiment, when the term "uplink channel" is used, the PUSCH and PUCCH are collectively referred to, and may be either PUSCH or PUCCH. Further, "uplink channel" may be replaced with "resource for an uplink channel" or "information transmitted on an uplink channel (at least one of UCI and uplink data)".

For example, the resource for PUCCH (PUCCH resource) may be determined based on at least a given field value (for example, a PUCCH resource identification field) in the DCI from a plurality of candidates configured by higher layer signaling. The resource for PUSCH may be specified by a given field value in DCI (for example, a time domain resource allocation field and a frequency domain resource allocation field).

Further, in the present embodiment, "after multiplexing a plurality of uplink channels into a single uplink channel" may indicate that at least one of the UCI and uplink data transmitted by the plurality of uplink channels is multiplexed into a single uplink channel. Note that the term "after multiplexing into a single uplink channel" may be after performing at least one of coding, modulation, and mapping of at least one of the UCI and data.

In the present embodiment, when the HARQ-ACK or the PUSCH occurs in the slot after multiplexing the plurality of uplink channels in the slot into a single uplink channel, the user terminal controls transmission of at least one of the HARQ-ACK and the PUSCH.

According to the claimed invention, a terminal determines a multiplexing of uplink control information within a plurality of overlapping uplink channels in a slot into a certain uplink channel, and thereafter, when there is another uplink control information to be transmitted on another uplink channel that overlaps in the slot with the certain uplink channel, the terminal performs a determination regarding an uplink channel for use in the slot for transmission of the another uplink control information.

Note that in the present embodiment, the "last downlink channel" as a reference for the timing condition is the last PDCCH among the PDCCHs related to all the uplink channels colliding in a slot #n, or is the last PDSCH among the PDSCHs related to all the uplink channels colliding in the slot #n. As described above, regarding the "downstream channel", the "last" is determined for every downlink channel (each of the PDCCH and the PDSCH). Note that the definition of "last" is not limited to this, and may be determined in common for the PDCCH and the PDSCH.

Further, the "uplink channel" as a reference for the timing condition may be determined in common for PUSCH and PUCCH in a given slot (for example, slot #n described later), or may be determined for every uplink channel (individually for each of the PUSCH and the PUCCH).

### (First Aspect)

In a first aspect, when a collision of a plurality of uplink channels occurs in a slot, the user terminal may determine a specific uplink resource (for example, the PUCCH resource or the PUSCH resource) for multiplexing at least one of UCI and uplink data (uplink shared channel (UL-SCH)) within the colliding uplink channels (for example, one or more PUCCHs and a PUSCH, or a plurality of PUCCHs), and determine whether or not the specific uplink resource satisfies a timing condition based on all the uplink channels colliding in the slot.

The timing condition is for determining, from among a plurality of uplink channels whose first symbol is not located before a given period after the final symbol of the last downlink channel (the first symbol is located after a given period after the final symbol) among the downlink channels associated with all the uplink channels colliding in the slot #n, a specific resource for multiplexing at least one of the UCI and the uplink data within the plurality of uplink channels.

Here, the downlink channel related to the uplink channel may be, for example, the PDSCH corresponding to the HARQ-ACK transmitted by the PUCCH, the PDCCH that transmits the DCI that schedules the PDSCH, the PDCCH that transmits the DCI that schedules the PUSCH, and the like.

Further, the given period may be, for example, a requirement for the HARQ-ACK timing (for example, N₁⁺ + d_{1,1} + d_{1,2}) or a requirement for the PUSCH timing (for example, N₂⁺ + d_{2,1}).

As described above, in the first aspect, the specific uplink resource for multiplexing at least one of the UCI and the uplink data within the plurality of uplink channels may be determined from all the uplink resources colliding in the slot, regardless of whether or not the plurality of uplink channels has been multiplexed once.

Note that in the first aspect below, an example will be described of multiplexing the HARQ-ACK/PUSCH with the plurality of uplink channels to a specific uplink channel even in a case where at least one of the HARQ-ACK and PUSCH (HARQ-ACK/PUSCH) is generated in the same slot after multiplexing the plurality of uplink channels in the slot into a single uplink channel, but the present invention is not limited to this as described above.

The specific uplink channel may be the original single uplink channel or another uplink channel allocated within the slot #n.

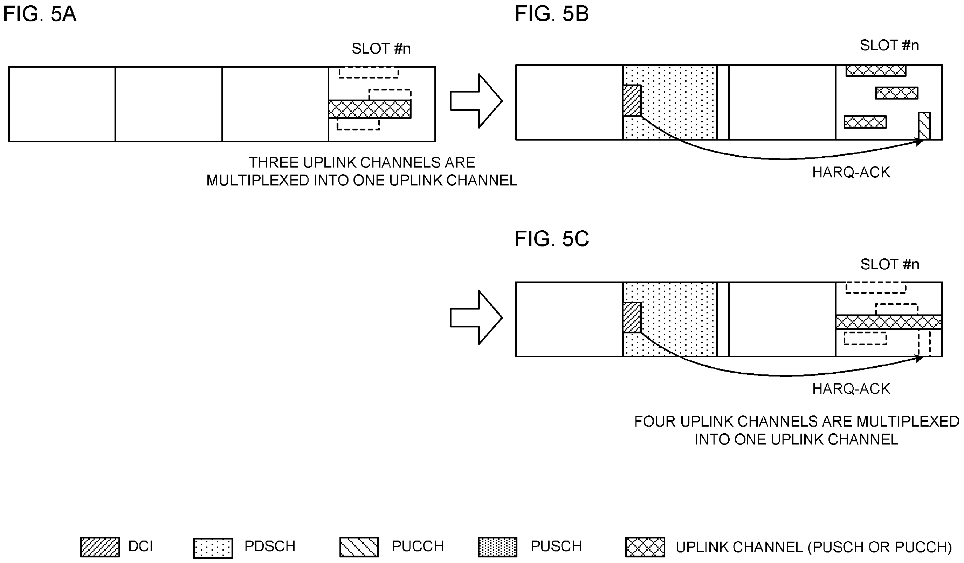

Figs. 5A to 5C are diagrams illustrating examples of user terminal operations at a time of a collision according to the first aspect. In Fig. 5A, it is assumed a case where after the user terminal has determined to multiplex three uplink channels into a single uplink channel in the slot #n, the HARQ-ACK further occurs in the slot #n.

In the case illustrated in Fig. 5A, the user terminal may restore the three uplink channels multiplexed into a single uplink channel (Fig. 5B), and then multiplex the HARQ-ACK that is generated later together with the three uplink channels into a specific uplink channel (Fig. 5C). Thus, the user terminal may multiplex the HARQ-ACK that is generated later to the original single uplink channel in addition to the three uplink channels.

Note that although not illustrated, the same applies when the PUSCH is scheduled in the slot #n after it is determined to multiplex the three uplink channels into a single uplink channel in the slot #n. In this case, the user terminal may multiplex the PUSCH that is generated later into the original single uplink channel in addition to the three uplink channels.

In the first aspect, all uplink channels colliding in the same slot #n are multiplexed into a single uplink channel regardless of the timing in the slot #n, so that the user terminal can easily control at a time of a collision of uplink channels.

### (Second Aspect)

In a second aspect, when a collision of a plurality of uplink channels occurs in a slot, a specific uplink resource (for example, a PUCCH resource or a PUSCH resource) for multiplexing at least one of UCI and uplink data (UL-SCH) within overlapping uplink channels (for example, one or more PUCCHs and a PUSCH, or a plurality of PUCCHs) may be determined, and whether or not the specific uplink resource satisfies the timing condition may be determined based on different conditions depending on whether or not it is before the timing condition by a given number of symbols X.

Specifically, the final symbol of the last downlink channel is before the X symbol of the timing condition (for example, the requirement for the HARQ-ACK timing (for example, N₁⁺ + d_{1,1} + d_{1,2}) or the requirement for the PUSCH timing (for example, N₂⁺ + d_{2,1})), the user terminal may determine whether or not the specific uplink resource satisfies the timing condition based on all the uplink channels colliding in the slot.

On the other hand, the final symbol of the last downlink channel is after the X symbol of the timing condition (for example, the requirement for the HARQ-ACK timing (for example, N₁⁺ + d_{1,1} + d_{1,2}) or the requirement for the PUSCH timing (for example, N₂⁺ + d_{2,1})), the user terminal may determine whether or not the specific uplink resource satisfies the timing condition based on a resulting resource.

Here, the resulting resource may be, for example, an uplink channel (specific uplink resource) to which it is determined to multiplex a plurality of uplink channels.

As described above, in the second aspect, whether or not the specific uplink resource for multiplexing at least one of the UCI and the uplink data within the plurality of uplink channels satisfies the timing condition is determined based on the timing of the final symbol of the last downlink channel, regardless of whether or not the plurality of uplink channels has been multiplexed once.

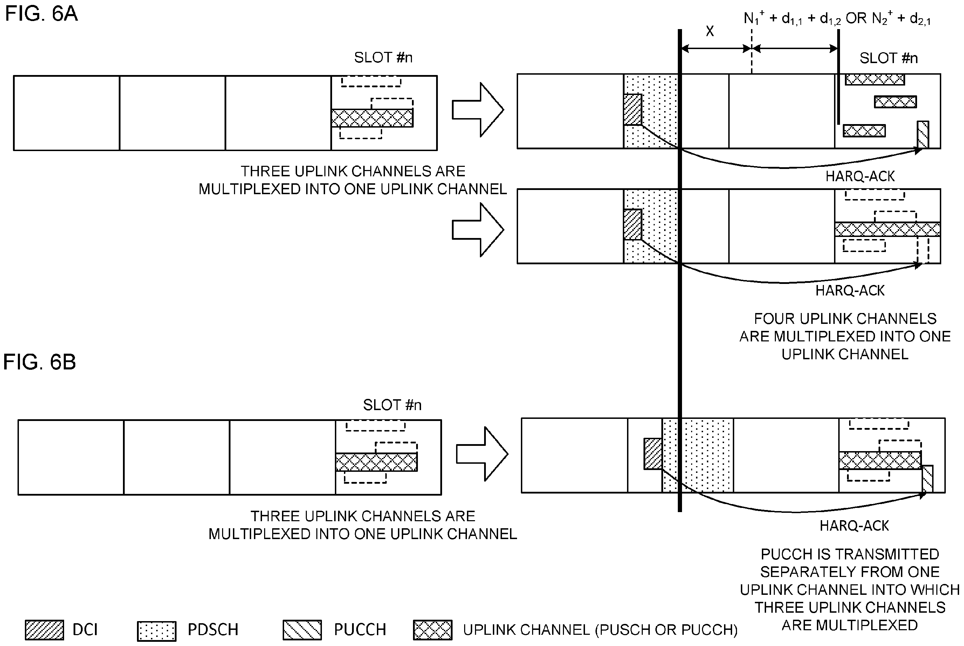

Figs. 6A and 6B are diagrams illustrating examples of user terminal operations at a time of a collision according to the second aspect. The preconditions in Figs. 6A and 6B are similar to those in Figs. 5A to 5C. Differences from Figs. 5A to 5C will be mainly described in the following. In Figs. 6A and 6B, it is determined whether or not the final symbol of the last PDSCH is before the X symbol of N₁⁺ + d_{1,1} + d_{1,2}, and it is determined whether or not the final symbol of the last PDCCH is before the X symbol of N₂⁺ + d_{2,1}.

Fig. 6A illustrates a case where each of the final symbols of the last PDSCH and PDCCH is before the X symbol of the timing condition (for example, the requirement for the HARQ-ACK timing (for example, N₁⁺ + d_{1,1} + d_{1,2}) and the requirement for the PUSCH timing (for example, N₂⁺ + d_{2,1})).

In the case of Fig. 6A, a specific uplink resource for multiplexing at least one of the UCI and the uplink data (UL-SCH) within the colliding uplink channel is determined, and whether or not the specific uplink resource satisfies the timing condition may be determined based on all the uplink channels colliding in the slot.

Further, the given period X may be determined based on, for example, at least one of a fixed value, the number of PUCCH symbols in the slot, and the number of PUSCH symbols in the slot. Further, the given period X may be defined in advance in the specifications or may be configured by higher layer signaling.

On the other hand, Fig. 6B illustrates a case where each of the final symbols of the last PDSCH and PDCCH is after the X symbol of the timing condition (for example, the requirement for the HARQ-ACK timing (for example, N₁⁺ + d_{1,1} + d_{1,2}) and the requirement for the PUSCH timing (for example, N₂⁺ + d_{2,1})). In the case of Fig. 6B, a specific uplink resource for multiplexing at least one of the UCI and the uplink data (UL-SCH) within the colliding uplink channel is determined, and whether or not the specific uplink resource satisfies the timing condition may be determined based on the aforementioned resulting resource.

Note that, in Fig. 6B, the user terminal may transmit the PUCCH for HARQ-ACK generated later in the slot #, in addition to a single uplink channel in which three uplink channels are multiplexed.

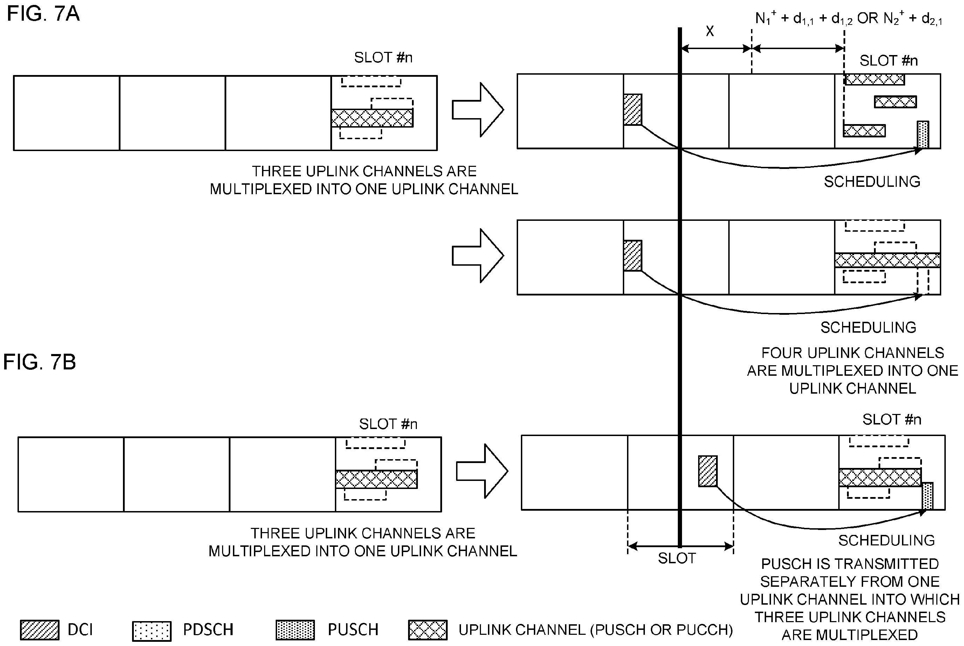

Figs. 7A and 7B are diagrams illustrating another example of the user terminal operations at a time of a collision according to the second aspect. Figs. 7A and 7B differ from Figs. 6A and 6B in that the aforementioned resulting resource is the PUSCH rather than the PUCCH. On the other hand, the user terminal is similar to that in Figs. 6A and 6B.

In the second aspect, whether or not a specific uplink resource for multiplexing at least one of the UCI and the uplink data within the plurality of uplink channels satisfies the timing condition is determined based on the uplink resource that differs depending on the timing of the final symbol of the last downlink channel. Thus, the user terminal can appropriately control at a time of a collision of uplink channels.

### (Third Aspect)

In a third aspect, when a collision of a plurality of uplink channels occurs in a slot, a specific uplink resource (for example, a PUCCH resource or a PUSCH resource) for multiplexing at least one of UCI and uplink data (UL-SCH) within overlapping uplink channels (for example, one or more PUCCHs and a PUSCH, or a plurality of PUCCHs) may be determined, and whether or not the specific uplink resource satisfies the timing condition may be determined based on whether or not it is before a given number Y of uplink resources collide.

Specifically, when an uplink resource corresponding to the last downlink channel is before the given number Y of uplink resources collide, the user terminal may determine whether or not the specific uplink resource satisfies the timing condition based on all the uplink channels that collide in the slot.

On the other hand, when the uplink resource corresponding to the last downlink channel collides with a given number Y of uplink resources, the user terminal may determine whether or not the specific uplink resource satisfies the timing condition based on a resulting resource.

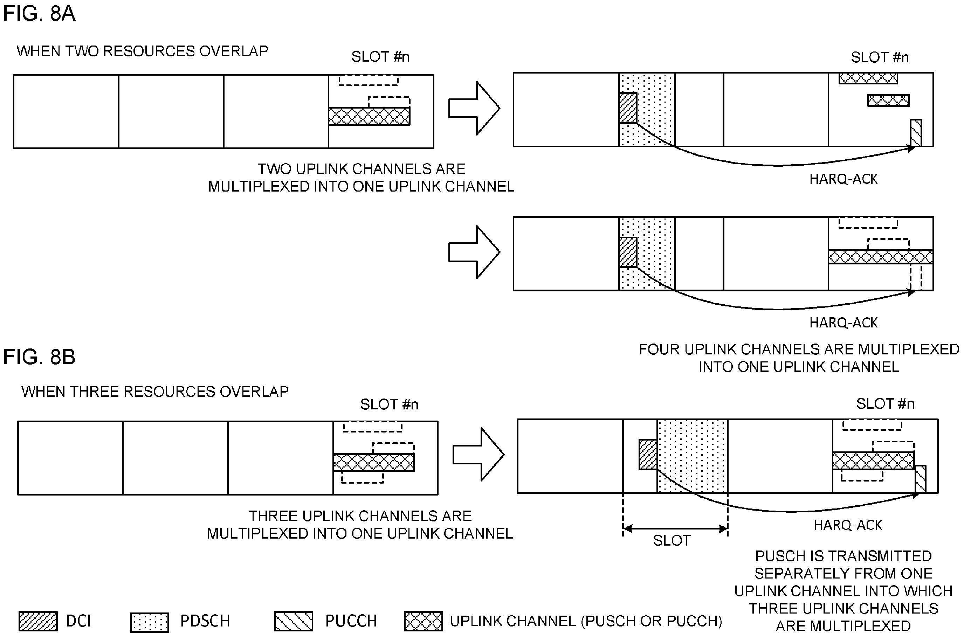

Figs. 8A and 8B are diagrams illustrating examples of user terminal operations at a time of a collision according to the third aspect.

Fig. 8A illustrates a case where the uplink resource corresponding to the last downlink channel is before the given number Y of uplink resources collide. In the case of Fig. 8A, a specific uplink resource for multiplexing at least one of the UCI and the uplink data (UL-SCH) in the colliding uplink channel may be determined, and whether or not the specific uplink resource satisfies the timing condition may be determined based on all uplink channels colliding in the slot.

Fig. 8B illustrates a case where the uplink resource corresponding to the last downlink channel is after the collision of the given number Y of uplink resources. In the case of Fig. 8B, a specific uplink resource for multiplexing at least one of the UCI and the uplink data (UL-SCH) in the colliding uplink channel may be determined, and whether or not the specific uplink resource satisfies the timing condition may be determined based on the resulting resource.

Note that although not illustrated, similar control has only to be performed when a PUSCH is scheduled in a slot #n after multiplexing a plurality of uplink channels into a single uplink channel in the slot #n.

In the third aspect, whether or not a specific uplink resource for multiplexing at least one of the UCI and the uplink data within the plurality of uplink channels satisfies the timing condition is determined based on what order the collision of the uplink resource corresponding to the last downlink channel is. Thus, the user terminal can appropriately control at a time of a collision of uplink channels.

### (Fourth Aspect)

In a fourth aspect, when a collision of a plurality of uplink channels occurs in a slot, the user terminal may determine a specific uplink resource (for example, a PUCCH resource or a PUSCH resource) for multiplexing at least one of UCI and uplink data (uplink shared channel (UL-SCH)) within the overlapping uplink channels (for example, one or more PUCCHs and a PUSCH, or a plurality of PUCCHs), and may determine whether or not the specific uplink resource satisfies a timing condition based on different conditions depending on a type of service (for example, enhanced mobile broad band (eMBB) or ultra reliable and low latency communications (URLLC)).

Specifically, when the type of service is eMBB, the user terminal may determine whether or not the specific uplink resource satisfies the timing condition based on all the uplink channels colliding in the slot.

On the other hand, when the type of service is URLLC, the user terminal may determine whether or not the specific uplink resource satisfies the timing condition based on a resulting resource.

Here, the type of service may be identified by a modulation and coding scheme (MCS) table specified by DCI. Alternatively, the type of service may be identified based on a given identifier (for example, a radio network temporary identifier (RNTI)) used for scramble (CRC scramble) of a cyclic redundancy check (CRC) bit added to the DCI.

For example, when a user terminal specifies a specific MCS table (for example, MCS table 3 for URLLC) by the DCI, the user terminal may determine whether or not the specific uplink resource satisfies the timing condition based on the resulting resource. On the other hand, in a case other than the above, the user terminal may determine whether or not the specific uplink resource satisfies the timing condition based on all the uplink channels colliding in the slot.

Alternatively, when the DCI is CRC scrambled by a specific RNTI (also referred to as, for example, RNTI for URLLC, new RNTI, MCS RNTI, mcs-c-RNTI, URLLC-RNTI, U-RNTI, Y-RNTI, or X-RNTI, or the like), the user terminal may determine whether or not the specific uplink resource satisfies the timing condition based on the resulting resource. On the other hand, in a case other than the above, the user terminal may determine whether or not the specific uplink resource satisfies the timing condition based on all the uplink channels colliding in the slot.

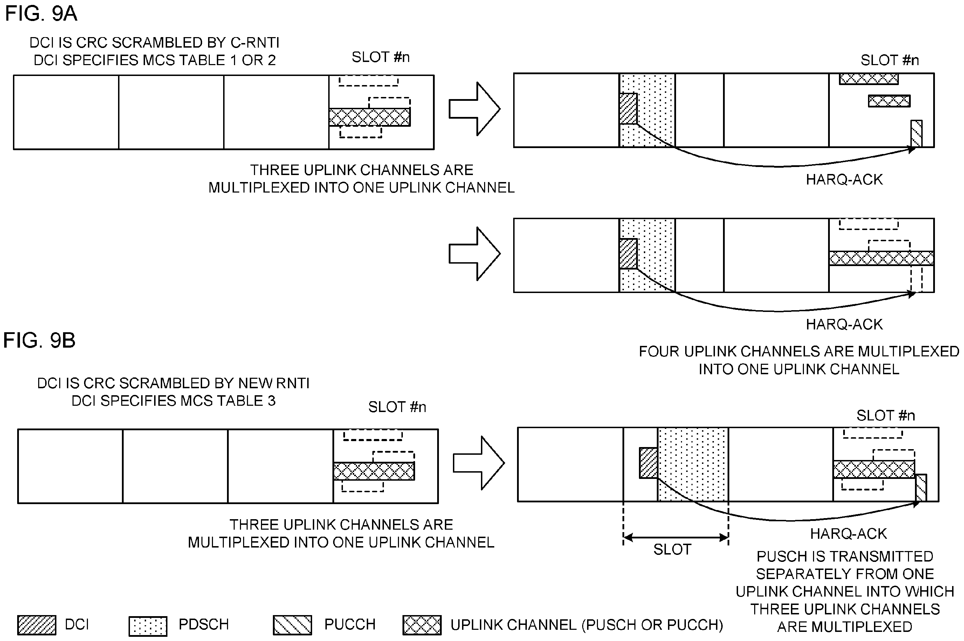

Figs. 9A and 9B are diagrams illustrating examples of the user terminal operations at a time of a collision according to the fourth aspect.

As illustrated in Fig. 9A, when the DCI that schedules the PDSCH corresponding to the HARQ-ACK is CRC scrambled by the C-RNTI, or the DCI specifies the first or second MCS table (the first MCS table that supports the modulation order of "6" or lower, the second MCS table that supports the modulation order of "8" or lower, or the MCS table for eMBB), the user terminal may determine whether or not the specific uplink resource satisfies the timing condition based on all the uplink channels colliding in the slot.

On the other hand, as illustrated in Fig. 9B, when the DCI that schedules the PDSCH corresponding to the HARQ-ACK is CRC scrambled by the new RNTI, or the DCI specifies a third MCS table (MCS table that supports a modulation order of "6" or lower and has a code rate equal to or less than the code rate corresponding to the same modulation order as that of the first MCS table, or an MCS table for URLLC), the user terminal may determine whether or not the specific uplink resource satisfies the timing condition based on the resulting resource.

Note that although not illustrated, similar control has only to be performed when a PUSCH is scheduled in a slot #n after multiplexing a plurality of uplink channels into a single uplink channel in the slot #n. In this case, the above DCI has only to be replaced with the DCI (UL grant) that schedules the PUSCH.

In the fourth aspect, whether or not a specific uplink resource for multiplexing at least one of the UCI and the uplink data within the plurality of uplink channels satisfies the timing condition is determined based on the type of service. Thus, the user terminal can appropriately control at a time of a collision of uplink channels.

### (Fifth Aspect)

In a fifth aspect, every time two colliding uplink channels occur in a slot #n, the user terminal may determine whether or not to multiplex the two uplink channels into a single uplink channel.

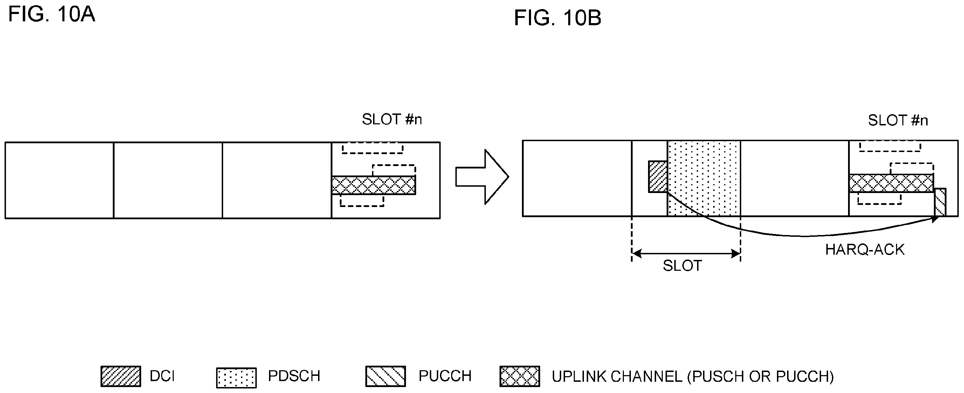

Figs. 10A and 10B are diagrams illustrating examples of user terminal operations at a time of a collision according to the fifth aspect. In Fig. 10A, it is determined whether or not to multiplex first two uplink channels in the slot #n into a single uplink channel, and then the multiplexing is performed. Thereafter, it is determined whether or not to multiplex the single uplink channel and a remaining single uplink channel, and then the multiplexing is performed. As a result, in Fig. 10A, the three uplink channels are multiplexed into the single uplink channel.

As described above, the fifth aspect differs from the first to fourth aspects in that two or more uplink channels are not multiplexed into a single uplink channel all at once, but are multiplexed two by two.

In Fig. 10B, the user terminal determines whether or not to multiplex a HARQ-ACK with the single uplink channel of Fig. 10A. For example, the user terminal may determine whether or not to multiplex the HARQ-ACK into the uplink channel based on at least one of payload, modulation scheme, and code rate of the single uplink channel in Fig. 10A. For example, in Fig. 10B, the HARQ-ACK is transmitted using a PUCCH without multiplexing to the single uplink channel of Fig. 10A.

Note that although not illustrated, in Fig. 10B, similar control has only to be performed when a PUSCH is scheduled in a slot #n after a plurality of uplink channels is multiplexed into a single uplink channel in the slot #n.

In the fifth aspect, every time two colliding uplink channels occur, it is determined whether or not to multiplex the two uplink channels into a single uplink channel, and thus a determination of multiplexing of two or more uplink channels can be made more appropriately.

### (Radio communication system)

Now, a configuration of a radio communication system according to the present embodiment will be described below. In this radio communication system, communication is performed using one or a combination of the radio communication methods according to the embodiments of the present disclosure.

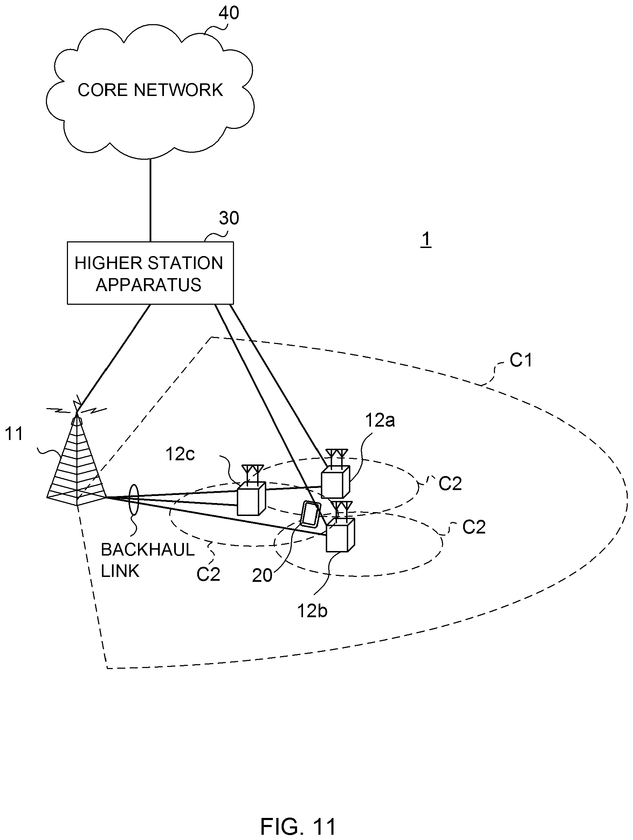

Fig. 11 is a diagram illustrating an example of a schematic configuration of a radio communication system according to the present embodiment. A radio communication system 1 can employ carrier aggregation (CA) and/or dual connectivity (DC) to group a plurality of fundamental frequency blocks (component carriers) into one, where the LTE system bandwidth (for example, 20 MHz) constitutes one unit.

Note that the radio communication system 1 may be referred to as "Long Term Evolution (LTE)", "LTE-Advanced (LTE-A)", "LTE-Beyond (LTE-B)", "SUPER 3G", "IMT-Advanced", "4th generation mobile communication system (4G)", "5th generation mobile communication system (5G)", "New Radio (NR)", "Future Radio Access (FRA)", "New Radio Access Technology (New-RAT)", and so on, or may be referred to as a system to implement these.

The radio communication system 1 includes a base station 11 that forms a macro cell C1 covering a relatively wide coverage, and base stations 12 (12a to 12c) that are arranged within the macro cell C1 and form small cells C2 that are narrower than the macro cell C1. Also, a user terminal 20 is placed in the macro cell C1 and in each small cell C2. The arrangement, number and so on of cells and the user terminal 20 are not limited to aspects illustrated in the drawings.

The user terminal 20 can connect with both the base station 11 and the base stations 12. It is assumed that the user terminal 20 uses the macro cell C1 and the small cells C2 at the same time using CA or DC. Furthermore, the user terminal 20 may apply CA or DC using a plurality of cells (CCs).

Between the user terminal 20 and the base station 11, communication can be carried out using a carrier of a relatively low frequency band (for example, 2 GHz) and a narrow bandwidth (referred to as an "existing carrier", a "legacy carrier" and so on). Meanwhile, between the user terminal 20 and the base stations 12, a carrier of a relatively high frequency band (for example, 3.5 GHz, 5 GHz and so on) and a wide bandwidth may be used, or the same carrier as that used in the base station 11 may be used. Note that the structure of the frequency band for use in each base station is by no means limited to these.

Also, the user terminal 20 can perform communication in each cell using time division duplex (TDD) and/or frequency division duplex (FDD). Further, in each cell (carrier), a single numerology may be applied, or a plurality of different numerologies may be applied.

The numerology may be a communication parameter applied to transmission and/or reception of a signal and/or channel, and may indicate, for example, at least one of subcarrier interval, bandwidth, symbol length, cyclic prefix length, subframe length, TTI length, number of symbols per TTI, radio frame configuration, specific filtering processing performed by a transceiver in a frequency domain, specific windowing processing performed by a transceiver in a time domain, and the like. For example, for a certain physical channel, when the subcarrier interval of the constituent OFDM symbols is different and/or the number of OFDM symbols is different, it may be regarded that the numerology is different.

The base station 11 and the base station 12 (or between two base stations 12) may be connected by wire (for example, an optical fiber, an X2 interface, and so on in compliance with the common public radio interface (CPRI)) or wirelessly.

The base station 11 and the base stations 12 are each connected with higher station apparatus 30, and are connected with a core network 40 via the higher station apparatus 30. Note that the higher station apparatus 30 may be, for example, an access gateway apparatus, a radio network controller (RNC), a mobility management entity (MME), and so on, but is by no means limited to these. Also, each base station 12 may be connected with the higher station apparatus 30 via the base station 11.

Note that the base station 11 is a base station having a relatively wide coverage, and may be referred to as a "macro base station", an "aggregate node", an "eNB (eNodeB)", a "transmission/reception point" and so on. Also, the base stations 12 are base stations having local coverages, and may be referred to as "small base stations", "micro base stations", "pico base stations", "Femto base stations", "HeNBs (Home eNodeBs)", "RRHs (Remote Radio Heads)", "transmission/reception points" and so on. Hereinafter, the base stations 11 and 12 will be collectively referred to as "base stations 10", unless these are distinguished from each other.

Each user terminal 20 is terminal to support various communication schemes such as LTE, LTE-A and so on, and may be either mobile communication terminals (mobile stations) or stationary communication terminals (fixed stations).

In the radio communication system 1, as radio access schemes, orthogonal frequency division multiple access (OFDMA) is applied to the downlink, and single carrier frequency division multiple access (SC-FDMA) and/or OFDMA are applied to the uplink.

OFDMA is a multi-carrier communication scheme to perform communication by dividing a frequency bandwidth into a plurality of narrow frequency bandwidths (subcarriers) and mapping data to each subcarrier. SC-FDMA is a single-carrier communication scheme to mitigate interference between terminals by dividing the system bandwidth into bands formed with one or continuous resource blocks per terminal, and allowing a plurality of terminals to use mutually different bands. Note that the uplink and downlink radio access schemes are not limited to the combinations of these, and other radio access schemes may be used as well.

In the radio communication system 1, a downlink shared channel (physical downlink shared channel (PDSCH)), which is used by each user terminal 20 on a shared basis, a broadcast channel (physical broadcast channel (PBCH)), downlink L1/L2 control channels and so on are used as downlink channels. User data, higher layer control information, and a system information block (SIB) and so on are transmitted by the PDSCH. Further, a master information block (MIB) is transmitted by the PBCH.

The downlink L1/L2 control channels include a physical downlink control channel (PDCCH), an enhanced physical downlink control channel (EPDCCH), a physical control format indicator channel (PCFICH), a physical hybrid-ARQ indicator channel (PHICH), or the like. Downlink control information (DCI) including scheduling information of PDSCH and/or PUSCH, or the like is transmitted by the PDCCH.

Note that DCI that schedules downlink data reception may also be referred to as "DL assignment", while DCI that schedules UL data transmission may also be referred to as a "UL grant".

The number of OFDM symbols for use in PDCCH is transmitted by PCFICH. HARQ (Hybrid Automatic Repeat reQuest) delivery acknowledgement information (also referred to as, for example, "retransmission control information", "HARQ-ACKs", "ACK/NACKs", and so on) in response to the PUSCH is transmitted by the PHICH. The EPDCCH is frequency-division-multiplexed with the PDSCH (downlink shared data channel) and used to communicate DCI and so on, like the PDCCH.

In the radio communication system 1, an uplink shared channel (physical uplink shared channel (PUSCH)), which is used by each user terminal 20 on a shared basis, an uplink control channel (physical uplink control channel (PUCCH)), a random access channel (physical random access channel (PRACH)) and so on are used as uplink channels. User data, higher layer control information, and so on are transmitted by the PUSCH. Also, downlink radio quality information (channel quality indicator (CQI)), delivery acknowledgement information, scheduling request (SR), and so on are transmitted by the PUCCH. By means of PRACH, random access preambles for establishing connections with cells are transmitted.

In the radio communication systems 1, a cell-specific reference signal (CRS), a channel state information reference signal (CSI-RS), a demodulation reference signal (DMRS), a positioning reference signal (PRSs), and so on are transmitted as downlink reference signals. Also, in the radio communication system 1, a measurement reference signal (sounding reference signal (SRS)), a demodulation reference signal (DMRS), and so on are transmitted as uplink reference signals. Note that the DMRS may be referred to as a "user terminal-specific reference signal (UE-specific Reference Signal)". Also, reference signals to be transmitted are by no means limited to these.

### <Base Station>

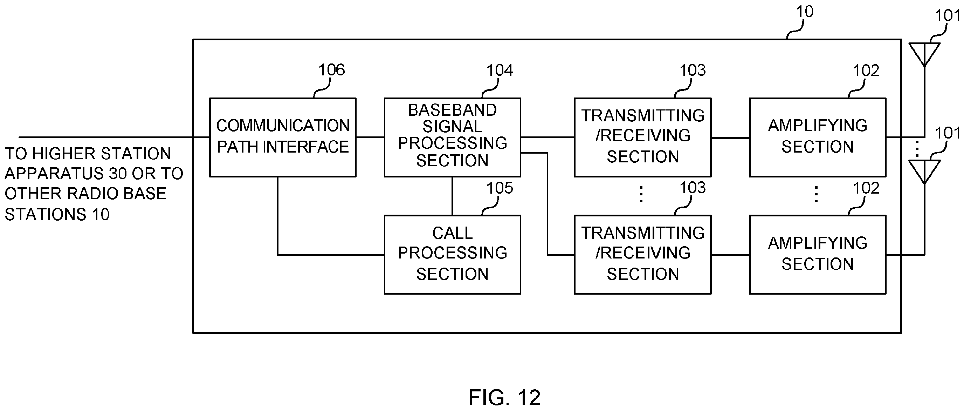

Fig. 12 is a diagram illustrating an example of an overall configuration of a base station according to the present embodiment. A base station 10 has a plurality of transmitting/receiving antennas 101, amplifying sections 102, transmitting/receiving sections 103, a baseband signal processing section 104, a call processing section 105 and a communication path interface 106. Note that it is sufficient as long as one or more of each of the transmitting/receiving antennas 101, amplifying sections 102, and the transmitting/receiving sections 103 are provided.

User data to be transmitted from the base station 10 to the user terminal 20 on the downlink is input from the higher station apparatus 30 to the baseband signal processing section 104, via the communication path interface 106.

In the baseband signal processing section 104, the user data is subjected to transmission processing, including packet data convergence protocol (PDCP) layer processing, division and coupling of the user data, radio link control (RLC) layer transmission processing such as RLC retransmission control, medium access control (MAC) retransmission control (for example, a hybrid automatic repeat request (HARQ) transmission processing), scheduling, transport format selection, channel coding, inverse fast Fourier transform (IFFT) processing, and precoding processing, and the result is forwarded to each transmitting/receiving sections 103. Furthermore, downlink control signals are also subjected to transmission processing such as channel coding and an inverse fast Fourier transform, and forwarded to the transmitting/receiving sections 103.

The transmitting/receiving section 103 converts a baseband signal output from the baseband signal processing section 104 after being precoded in every antenna into a signal in a radio frequency band, and transmits the signal. The radio frequency signals having been subjected to frequency conversion in the transmitting/receiving sections 103 are amplified in the amplifying sections 102, and transmitted from the transmitting/receiving antennas 101. The transmitting/receiving section 103 can be constituted by a transmitter/receiver, a transmitting/receiving circuit or transmitting/receiving device that can be described based on general understanding of the technical field to which the present disclosure pertains. Note that a transmitting/receiving section 103 may be structured as a transmitting/receiving section in one entity, or may be constituted by a transmitting section and a receiving section.

Meanwhile, as for uplink signals, radio frequency signals that are received in the transmitting/receiving antennas 101 are each amplified in the amplifying section 102. The transmitting/receiving sections 103 receive the uplink signals amplified in the amplifying section 102. The received signals are converted into the baseband signal through frequency conversion in the transmitting/receiving sections 103 and output to the baseband signal processing section 104.

In the baseband signal processing section 104, user data that is included in the uplink signals that are input is subjected to fast Fourier transform (FFT) processing, inverse discrete Fourier transform (IDFT) processing, error correction decoding, MAC retransmission control receiving processing, and RLC layer and PDCP layer receiving processing, and forwarded to the higher station apparatus 30 via the communication path interface 106. The call processing section 105 performs call processing (such as configuring and releasing) of communication channels, manages the state of the base stations 10 and manages the radio resources.

The communication path interface 106 transmits and receives signals to and from the higher station apparatus 30 via a given interface. Also, the communication path interface 106 may transmit and receive signals (backhaul signaling) with other base stations 10 via an inter-base station interface (which is, for example, optical fiber that is in compliance with the CPRI (Common Public Radio Interface), the X2 interface, and the like).

Note that the transmitting/receiving section 103 may further include an analog beamforming unit that performs analog beamforming. The analog beam forming unit may be composed of an analog beam forming circuit (for example, a phase shifter, a phase shift circuit) or an analog beam forming device (for example, a phase shifter), which is described based on common understanding in the technical field according to the present invention. Further, the transmitting/receiving antenna 101 may be composed of an array antenna, for example.

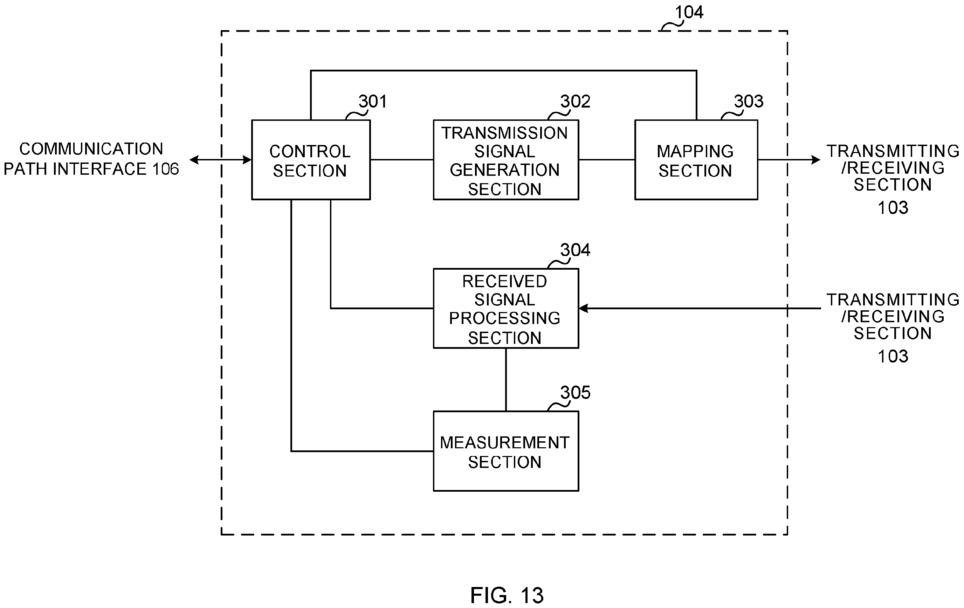

Fig. 13 is a diagram illustrating an example of a functional configuration of the base station according to the present embodiment. Note that, although this example will primarily illustrate functional blocks that pertain to characteristic parts of the present embodiment, it may be assumed that the base station 10 has other functional blocks that are necessary for radio communication as well.

The baseband signal processing section 104 at least has a control section (scheduler) 301, a transmission signal generation section 302, a mapping section 303, a received signal processing section 304 and a measurement section 305. Note that these configurations have only to be included in the base station 10, and some or all of these configurations may not be included in the baseband signal processing section 104.

The control section (scheduler) 301 controls the whole of the base station 10. The control section 301 can be constituted by a controller, a control circuit, or control device that can be described based on general understanding of the technical field to which the present disclosure pertains.

For example, the control section 301 controls the generation of signals in the transmission signal generation section 302, the allocation of signals in the mapping section 303, and the like. Further, the control section 301 controls the signal receiving processing in the received signal processing section 304, the measurements of signals in the measurement section 305, and so on.

The control section 301 controls the scheduling (for example, resource allocation) of system information, downlink data signals (for example, signals transmitted in the PDSCH), and downlink control signals (for example, signals that are transmitted in the PDCCH and/or the EPDCCH, delivery acknowledgement information, or the like). Delivery acknowledgement information, or the like) scheduling (for example, resource allocation) of delivery acknowledgement information). Further, the control section 301 controls the generation of downlink control signals, downlink data signals and so on, based on the results of determining whether or not retransmission control is necessary for uplink data signals, and so on.

The control section 301 controls the scheduling of synchronization signals (for example, the primary synchronization signal (PSS)/secondary synchronization signal (SSS), SSB, downlink reference signals (for example, the CRS, the CSI-RS, and the DMRS), and the like.

The control section 301 controls the scheduling of uplink data signals (for example, signals transmitted in the PUSCH), uplink control signals (for example, signals that are transmitted in the PUCCH and/or the PUSCH, delivery acknowledgement information, or the like), random access preambles (for example, signals transmitted in the PRACH), uplink reference signals, and the like.

The control section 301 may perform control to form a transmission beam and/or a reception beam using a digital BF (for example, precoding) in the baseband signal processing section 104 and/or an analog BF (for example, phase rotation) in the transmitting/receiving section 103. The control section 301 may perform control to form the beams based on downlink propagation path information, uplink propagation path information, and the like. These pieces of propagation path information may be acquired from the received signal processing section 304 and/or the measurement section 305.

The transmission signal generation section 302 generates downlink signals (downlink control signals, downlink data signals, downlink reference signals and so on) based on commands from the control section 301, and outputs these signals to the mapping section 303. The transmission signal generation section 302 can be constituted by a signal generator, a signal generating circuit, or a signal generation device that can be described based on general understanding of the technical field to which the present disclosure pertains.

For example, the transmission signal generation section 302 generates DL assignments, which report downlink data allocation information, and/or UL grants, which report uplink data allocation information, based on commands from the control section 301. DL assignments and UL grants are both DCI, and follow the DCI format. Also, the downlink data signals are subjected to the coding process, the modulation process and so on, by using code rates and modulation schemes that are determined based on, for example, channel state information (CSI) reported from each user terminal 20.

The mapping section 303 maps the downlink signals generated in the transmission signal generation section 302 to given radio resources based on commands from the control section 301, and outputs these to the transmitting/receiving sections 103. The mapping section 303 can be constituted by a mapper, a mapping circuit, or a mapping device that can be described based on general understanding of the technical field to which the present disclosure pertains.

The received signal processing section 304 performs receiving processes (for example, demapping, demodulation, decoding and so on) of received signals that are input from the transmitting/receiving sections 103. Here, the received signals include, for example, uplink signals transmitted from the user terminal 20 (uplink control signals, uplink data signals, uplink reference signals, and so on). The received signal processing section 304 can be constituted by a signal processor, a signal processing circuit, or a signal processing device that can be described based on general understanding of the technical field to which the present disclosure pertains.

The received signal processing section 304 outputs, to the control section 301, information decoded by the receiving processing. For example, when a PUCCH including an HARQ-ACK is received, the received signal processing section 304 outputs this HARQ-ACK to the control section 301. Also, the received signal processing section 304 outputs the received signals, the signals after the receiving processes and so on, to the measurement section 305.

The measurement section 305 conducts measurements with respect to the received signals. The measurement section 305 can be constituted by a measurer, a measurement circuit, or a measurement device that can be described based on general understanding of the technical field to which the present disclosure pertains.

For example, the measurement section 305 may perform RRM (Radio Resource Management) measurements, CSI (Channel State Information) measurements and so on, based on the received signals. The measurement section 305 may measure the received power (for example, reference signal received power (RSRP)), the received quality (for example, reference signal received quality (RSRQ), signal to interference plus noise ratio (SINR), signal to noise ratio (SNR)), the signal strength (for example, received signal strength indicator (RSSI)), the transmission path information (for example, CSI), and so on. The measurement results may be output to the control section 301.

Note that the transmitting/receiving section 103 may transmit a downlink signal (for example, at least one of downlink control information (DCI), downlink control channel, and downlink shared channel). The transmitting/receiving section 103 may transmit at least one of the UCI and the uplink data by using the uplink shared channel or the uplink control channel.

### <User terminal>

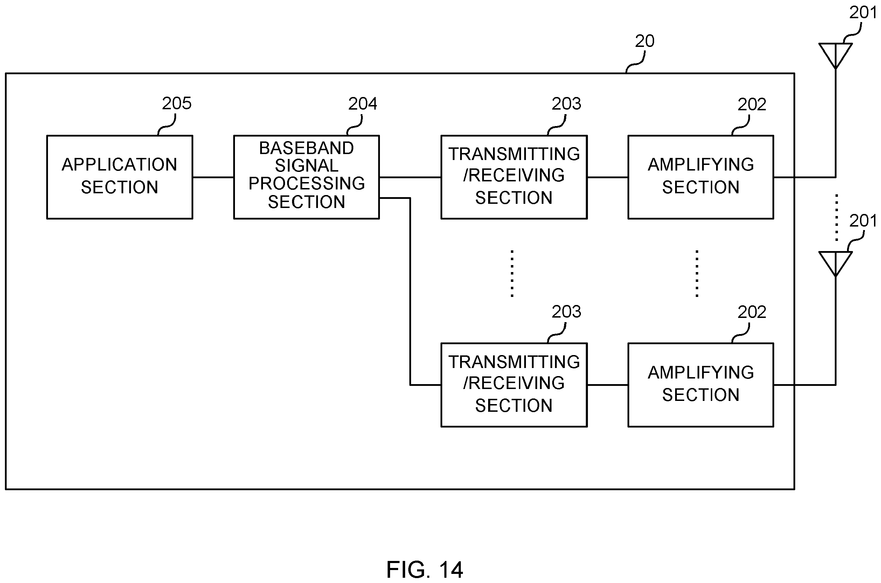

Fig. 14 is a diagram illustrating an example of an overall configuration of a user terminal according to the present embodiment. The user terminal 20 includes a plurality of transmitting/receiving antennas 201, amplifying sections 202, and transmitting/receiving sections 203, a baseband signal processing section 204, and an application section 205. Note that it is sufficient as long as one or more of each of the transmitting/receiving antennas 201, the amplifying sections 202, and the transmitting/receiving sections 203 are provided.

Radio frequency signals that are received in the transmitting/receiving antennas 201 are amplified in the amplifying sections 202. The transmitting/receiving sections 203 receive the downlink signals amplified in the amplifying sections 202. The received signals are subjected to frequency conversion and converted into the baseband signal in the transmitting/receiving sections 203, and output to the baseband signal processing section 204. The transmitting/receiving section 203 can be constituted by a transmitter/receiver, a transmitting/receiving circuit or transmitting/receiving device that can be described based on general understanding of the technical field to which the present disclosure pertains. Note that a transmitting/receiving section 203 may be structured as a transmitting/receiving section in one entity, or may be constituted by a transmitting section and a receiving section.

The baseband signal processing section 204 performs receiving processes for the baseband signal that is input, including an FFT process, error correction decoding, a retransmission control receiving process, and so on. Downlink user data is forwarded to the application section 205. The application section 205 performs processes related to higher layers above the physical layer and the MAC layer, and so on. Also, in the downlink data, the broadcast information may be also forwarded to the application section 205.

Meanwhile, uplink user data is input from the application section 205 to the baseband signal processing section 204. The baseband signal processing section 204 performs a retransmission control transmission process (for example, an HARQ transmission process), channel coding, precoding, a discrete Fourier transform (DFT) process, an IFFT process and so on, and the result is forwarded to the transmitting/receiving section 203.

Baseband signals that are output from the baseband signal processing section 204 are converted into a radio frequency band in the transmitting/receiving sections 203 and transmitted. The radio frequency signals having been subjected to frequency conversion in the transmitting/receiving sections 203 are amplified in the amplifying sections 202, and transmitted from the transmitting/receiving antennas 201.

Note that the transmitting/receiving section 203 may further include an analog beamforming unit that performs analog beamforming. The analog beam forming unit may be composed of an analog beam forming circuit (for example, a phase shifter, a phase shift circuit) or an analog beam forming device (for example, a phase shifter), which is described based on common understanding in the technical field according to the present invention. Further, the transmitting/receiving antenna 201 may be composed of an array antenna, for example.

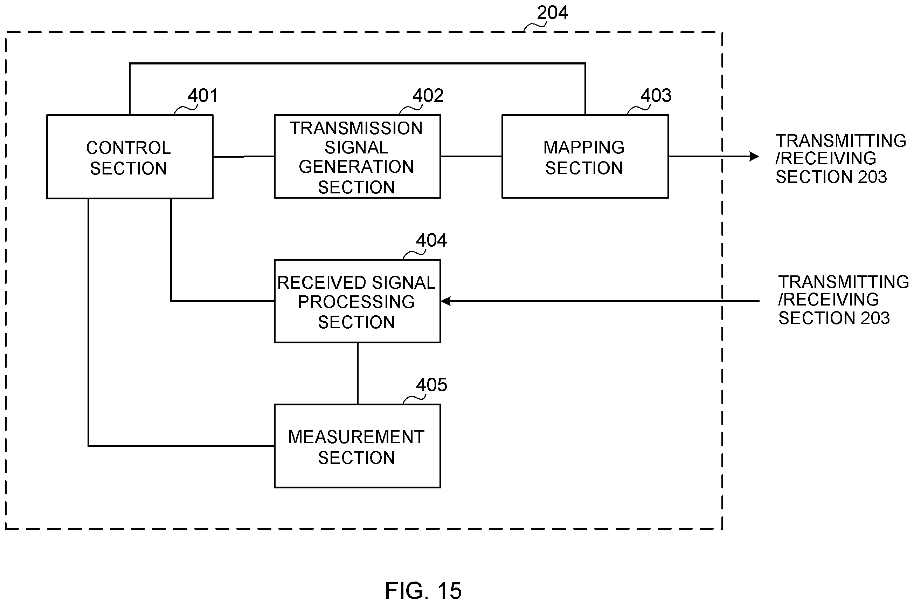

Fig. 15 is a diagram illustrating an example of a functional configuration of the user terminal according to the present embodiment. Note that, although this example will primarily illustrate functional blocks that pertain to characteristic parts of the present embodiment, it may be assumed that the user terminal 20 have other functional blocks that are necessary for radio communication as well.

The baseband signal processing section 204 provided in the user terminal 20 at least has a control section 401, a transmission signal generation section 402, a mapping section 403, a received signal processing section 404, and a measurement section 405. Note that these configurations have only to be included in the user terminal 20, and some or all of the configurations need not be included in the baseband signal processing section 204.

The control section 401 controls the whole of the user terminal 20. The control section 401 can be constituted by a controller, a control circuit, or control device that can be described based on general understanding of the technical field to which the present disclosure pertains.

The control section 401, for example, controls the generation of signals in the transmission signal generation section 402, the allocation of signals in the mapping section 403, and so on. Further, the control section 401 controls the signal receiving processing in the received signal processing section 404, the measurements of signals in the measurement section 405, and so on.

The control section 401 acquires the downlink control signals and downlink data signals transmitted from the base station 10, via the received signal processing section 404. The control section 401 controls the generation of uplink control signals and/or uplink data signals based on the results of determining whether or not retransmission control is necessary for the downlink control signals and/or downlink data signals, and so on.

The control section 401 may perform control to form a transmission beam and/or a reception beam using a digital BF (for example, precoding) in the baseband signal processing section 204 and/or an analog BF (for example, phase rotation) in the transmitting/receiving section 203. The control section 401 may perform control to form the beams based on downlink propagation path information, uplink propagation path information, and the like. These pieces of propagation path information may be acquired from the received signal processing section 404 and/or the measurement section 405.

Further, when the control section 401 acquires various information reported from the base station 10 from the received signal processing section 404, the control section 401 may update the parameter used for control based on the information.

The transmission signal generation section 402 generates uplink signals (uplink control signals, uplink data signals, uplink reference signals, and the like) based on commands from the control section 401, and outputs these signals to the mapping section 403. The transmission signal generation section 402 can be constituted by a signal generator, a signal generating circuit, or a signal generation device that can be described based on general understanding of the technical field to which the present disclosure pertains.

For example, the transmission signal generation section 402 generates uplink control signals such as delivery acknowledgement information, channel state information (CSI), and so on, based on commands from the control section 401. Also, the transmission signal generation section 402 generates uplink data signals based on instructions from the control section 401. For example, when a UL grant is included in a downlink control signal that is reported from the base station 10, the control section 401 instructs the transmission signal generation section 402 to generate an uplink data signal.

The mapping section 403 maps the uplink signals generated in the transmission signal generation section 402 to radio resources based on commands from the control section 401, and output the result to the transmitting/receiving section 203. The mapping section 403 can be constituted by a mapper, a mapping circuit, or a mapping device that can be described based on general understanding of the technical field to which the present disclosure pertains.

The received signal processing section 404 performs receiving processes (for example, demapping, demodulation, decoding and so on) of received signals that are input from the transmitting/receiving sections 203. Here, the received signals include, for example, downlink signals (downlink control signals, downlink data signals, downlink reference signals, and so on) that are transmitted from the base station 10. The received signal processing section 404 can be constituted by a signal processor, a signal processing circuit, or a signal processing device that can be described based on general understanding of the technical field to which the present disclosure pertains. Also, the received signal processing section 404 can constitute the receiving unit according to the present disclosure.

The received signal processing section 404 outputs the decoded information that is acquired through the receiving processing to the control section 401. The received signal processing section 404 outputs, for example, broadcast information, system information, RRC signaling, DCI and so on, to the control section 401. Also, the received signal processing section 404 outputs the received signals and/or the signals after the receiving processes to the measurement section 405.

The measurement section 405 conducts measurements with respect to the received signals. For example, the measurement section 405 may perform same frequency measurement and/or different frequency measurement for one or both of the first carrier and the second carrier. When the serving cell is included in the first carrier, the measurement section 405 may perform the different frequency measurement in the second carrier based on a measurement instruction acquired from the received signal processing section 404. The measurement section 405 can be constituted by a measurer, a measurement circuit, or a measurement device that can be described based on general understanding of the technical field to which the present disclosure pertains.

For example, the measurement section 405 may perform RRM measurements, CSI measurements, and so on based on the received signals. The measurement section 405 may measure the received power (for example, RSRP), the received quality (for example, RSRQ, SINR, SNR), the signal strength (for example, RSSI), transmission path information (for example, CSI), and so on. The measurement results may be output to the control section 401.

Note that the transmitting/receiving section 203 may receive a downlink signal (for example, at least one of downlink control information (DCI), downlink control channel, and downlink shared channel). The transmitting/receiving section 203 may transmit at least one of the UCI and the uplink data by using the uplink shared channel or the uplink control channel.

The control section 401 may control multiplexing of a plurality of uplink channels.

The control section 401 determines a specific uplink resource for multiplexing at least one of uplink control information and uplink data within the plurality of uplink channels, and determines whether or not the specific uplink resource satisfies the timing condition.

The control section 401 may determine whether or not the specific uplink resource satisfies the timing condition based on all the uplink resources corresponding to each of the plurality of uplink channels.

When the final symbol of the last downlink channel of the plurality of downlink channels is before the X symbol of the timing condition, the control section 401 may determine whether or not the specific uplink resource satisfies the timing condition based on all the uplink resources corresponding to each of the plurality of uplink channels. When the final symbol of the last downlink channel of the plurality of downlink channels is after the X symbol of the timing condition, the control section 401 may determine whether or not the specific uplink resource satisfies the timing condition based on a resulting resource.

When the uplink resource corresponding to the last downlink channel is before a given number Y of uplink resources collide, the control section 401 may determine whether or not the specific uplink resource satisfies the timing condition based on all the uplink resources corresponding to each of the plurality of uplink channels. When the uplink resource corresponding to the last downlink channel is after a given number Y of uplink resources collide, the control section 401 may determine whether or not the specific uplink resource satisfies the timing condition based on the resulting resource.

When a specific modulation and coding scheme (MCS) table is specified by the downlink control information or when a cyclic redundancy check (CRC) bit scrambled by a specific radio network temporary identifier (RNTI) is added to the downlink control information, the control section 401 may determine whether or not the specific uplink resource satisfies the timing condition based on all the uplink resources corresponding to each of the plurality of uplink channels. In cases other than the above, the control section 401 may determine whether or not the specific uplink resource satisfies the timing condition based on a resulting resource.

The control section 401 may determine whether or not to multiplex the delivery acknowledgement information or the uplink shared channel into the single uplink channel based on the single uplink channel.

### <Hardware Configuration>

Note that the block diagrams that have been used to describe the above embodiments illustrate blocks in functional units. These functional blocks (configuration units) may be implemented in arbitrary combinations of at least one of hardware and software. Also, the method for implementing each functional block is not particularly limited. That is, each functional block may be achieved by a single device physically or logically aggregated, or may be achieved by directly or indirectly connecting two or more physically or logically separate devices (using wires, radio, or the like, for example) and using these plural devices.

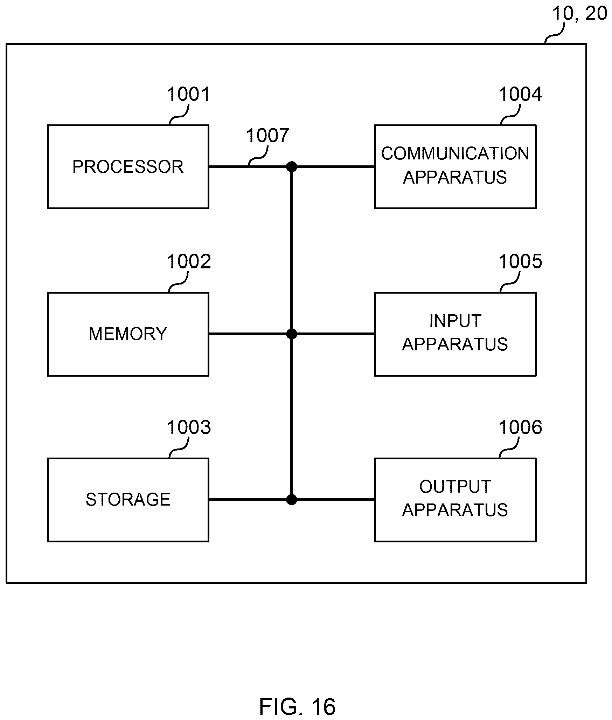

For example, the base station, the user terminal, and so on according to one embodiment of the present disclosure may function as a computer that executes the processing of the radio communication method of the present disclosure. Fig. 16 is a diagram illustrating an example of a hardware configuration of the base station and the user terminal according to one embodiment. Physically, the above-described base station 10 and user terminal 20 may be formed as a computer apparatus that includes a processor 1001, a memory 1002, a storage 1003, a communication apparatus 1004, an input apparatus 1005, an output apparatus 1006, a bus 1007, and so on.

Note that, in the following description, the word "apparatus" can be replaced with "circuit", "device", "unit", and so on. The hardware configuration of the base station 10 and the user terminal 20 may be designed to include one or more of the apparatuses illustrated in the drawings, or may be designed not to include some apparatuses.

For example, although only one processor 1001 is illustrated, a plurality of processors may be provided. Furthermore, processes may be implemented with one processor, or processes may be implemented in sequence, or in different manners, on two or more processors. Note that the processor 1001 may be implemented with one or more chips.

Each function of the base station 10 and the user terminal 20 is implemented by, for example, reading given software (program) into hardware such as the processor 1001 and the memory 1002, and by controlling the operation in the processor 1001, the communication in the communication apparatus 1004, and at least one of the reading and writing of data in the memory 1002 and the storage 1003.

The processor 1001 may control the whole computer by, for example, running an operating system. The processor 1001 may be configured with a central processing unit (CPU), which includes interfaces with peripheral equipment, a control device, a computing apparatus, a register, and so on. For example, the above-described baseband signal processing section 104 (204), call processing section 105 and so on may be implemented by the processor 1001.

Furthermore, the processor 1001 reads programs (program codes), software modules, data, and so on from at least one of the storage 1003 and the communication apparatus 1004 into the memory 1002, and executes various processing according to these. As for the programs, programs to allow computers to execute at least part of the operations of the above-described embodiments may be used. For example, the control section 401 of the user terminal 20 may be implemented by control programs that are stored in the memory 1002 and that operate on the processor 1001, and other functional blocks may be implemented likewise.

The memory 1002 is a computer-readable recording medium, and may be constituted by, for example, at least one of a read only memory (ROM), an erasable programmable ROM (EPROM), an electrically EPROM (EEPROM), a Random Access Memory (RAM) and/or other appropriate storage media. The memory 1002 may be referred to as a "register", a "cache", a "main memory (primary storage apparatus)" and so on. The memory 1002 can store a program (program code), a software module, and the like, which are executable for implementing the radio communication method according to one embodiment of the present disclosure.

The storage 1003 is a computer-readable recording medium, and may be constituted by, for example, at least one of a flexible disk, a floppy (registered trademark) disk, a magneto-optical disk (for example, a compact disc (CD-ROM (Compact Disc ROM) and so on), a digital versatile disc, a Blu-ray (registered trademark) disk), a removable disk, a hard disk drive, a smart card, a flash memory device (for example, a card, a stick, a key drive, and the like), a magnetic stripe, a database, a server, and/or other appropriate storage media. The storage 1003 may be referred to as "secondary storage apparatus".

The communication apparatus 1004 is hardware (transmitting/receiving device) for performing inter-computer communication via at least one of a wired network and a wireless network, and for example, is referred to as "network device", "network controller", "network card", "communication module", and the like. The communication apparatus 1004 may be configured to include a high frequency switch, a duplexer, a filter, a frequency synthesizer and so on in order to implement, for example, at least one of frequency division duplex (FDD) and time division duplex (TDD). For example, the above-described transmitting/receiving antennas 101 (201), amplifying sections 102 (202), transmitting/receiving sections 103 (203), communication path interface 106, and so on may be implemented by the communication apparatus 1004.

The input apparatus 1005 is an input device for receiving input from the outside (for example, a keyboard, a mouse, a microphone, a switch, a button, a sensor and so on). The output apparatus 1006 is an output device for allowing sending output to the outside (for example, a display, a speaker, an LED (Light Emitting Diode) lamp, and so on). Note that the input apparatus 1005 and the output apparatus 1006 may be provided in an integrated structure (for example, a touch panel).

Furthermore, these apparatuses, including the processor 1001, the memory 1002, and so on are connected by the bus 1007 so as to communicate information. The bus 1007 may be formed with a single bus, or may be formed with buses that vary between pieces of apparatus.

Also, the base station 10 and the user terminal 20 may be configured to include hardware such as a microprocessor, a digital signal processor (DSP), an application-specific integrated circuit (ASIC), a programmable logic device (PLD), a field programmable gate array (FPGA), and so on, and part or all of the functional blocks may be implemented by the hardware. For example, the processor 1001 may be implemented with at least one of these pieces of hardware.

### (Modifications)

Note that the terminology used in the present disclosure and the terminology that is needed to understand the present disclosure may be replaced with other terms that convey the same or similar meanings. For example, at least one of "channels" and "symbols" may be replaced with "signals" (or "signaling"). Also, "signals" may be replaced with "messages". A reference signal can be abbreviated as an "RS", and may be referred to as a "pilot", a "pilot signal" and so on, depending on which standard applies. Furthermore, a "component carrier (CC)" may be referred to as a "cell", a "frequency carrier", a "carrier frequency", and so on.

A radio frame may be formed with one or more durations (frames) in the time domain. Each of one or more periods (frames) constituting a radio frame may be referred to as a "subframe". Furthermore, a subframe may be formed with one or multiple slots in the time domain. A subframe may be a fixed time duration (for example, 1 ms) that is not dependent on numerology.

Here, the numerology may be a communication parameter used for at least one of transmission and reception of a certain signal or channel. For example, the numerology may indicate at least one of subcarrier spacing (SCS), a bandwidth, a symbol length, a cyclic prefix length, a transmission time interval (TTI), the number of symbols per TTI, a radio frame structure, specific filtering processing to be performed by a transceiver in the frequency domain, specific windowing processing to be performed by a transceiver in the time domain, and so on.

A slot may be formed with one or more symbols in the time domain (Orthogonal Frequency Division Multiplexing (OFDM) symbols, Single Carrier Frequency Division Multiple Access (SC-FDMA) symbols, or the like. Also, a slot may be a time unit based on numerology.

A slot may include a plurality of minislots. Each minislot may be formed with one or more symbols in the time domain. Also, a minislot may be referred to as a "subslot". Each minislot may be formed with fewer symbols than a slot. A PDSCH (or PUSCH) transmitted in a time unit larger than a minislot may be referred to as PDSCH (PUSCH) mapping type A. A PDSCH (or PUSCH) transmitted using a minislot may be referred to as "PDSCH (PUSCH) mapping type B".

A radio frame, a subframe, a slot, a minislot, and a symbol all represent the time unit in signal communication. A radio frame, a subframe, a slot, a minislot, and a symbol may be each called by other applicable names. Note that time units such as a frame, a subframe, a slot, a minislot, and a symbol in the present disclosure may be replaced with each other.

For example, one subframe may be referred to as a "transmission time interval (TTI)", or a plurality of consecutive subframes may be referred to as a "TTI", or one slot or mini-slot may be referred to as a "TTI". That is, at least one of a subframe and a TTI may be a subframe (1 ms) in existing LTE, may be a shorter period than 1 ms (for example, one to thirteen symbols), or may be a longer period of time than 1 ms. Note that the unit to represent the TTI may be referred to as a "slot", a "minislot" and so on, instead of a "subframe".

Here, a TTI refers to the minimum time unit of scheduling in radio communication, for example. For example, in LTE systems, the base station schedules the radio resources (such as the frequency bandwidth and transmission power that can be used in each user terminal) to allocate to each user terminal in TTI units. Note that the definition of TTIs is not limited to this.

The TTI may be the transmission time unit of channel-encoded data packets (transport blocks), code blocks, codewords and so on, or may be the unit of processing in scheduling, link adaptation and so on. Note that when TTI is given, a time interval (for example, the number of symbols) in which the transport blocks, the code blocks, the codewords, and the like are actually mapped may be shorter than TTI.

Note that, when one slot or one minislot is referred to as a "TTI", one or more TTIs (that is, one or more slots or one or more minislots) may be the minimum time unit of scheduling. Also, the number of slots (the number of minislots) to constitute this minimum time unit of scheduling may be controlled.

TTI having a time length of 1 ms may be called usual TTI (TTI in LTE Rel. 8-12), normal TTI, long TTI, a usual subframe, a normal subframe, a long subframe, a slot, or the like. A TTI that is shorter than the usual TTI may be referred to as "shortened TTI", "short TTI", "partial TTI" (or "fractional TTI"), "shortened subframe", "short subframe", "minislot", "sub-slot", "slot", or the like.

Note that a long TTI (for example, a normal TTI, a subframe, and the like) may be replaced with a TTI having a time duration exceeding 1 ms, and a short TTI (for example, a shortened TTI and the like) may be replaced with a TTI having a TTI duration less than the TTI duration of a long TTI and not less than 1 ms.

A resource block (RB) is the unit of resource allocation in the time domain and the frequency domain, and may include one or a plurality of consecutive subcarriers in the frequency domain. The number of subcarriers included in the RB may be the same regardless of the numerology, and may be 12, for example. The number of subcarriers included in the RB may be determined based on numerology.

Also, an RB may include one or more symbols in the time domain, and may be one slot, one minislot, one subframe, or one TTI in length. One TTI, one subframe, and the like each may be formed with one or more resource blocks.

Note that one or more RBs may be referred to as a "physical resource block (PRB (Physical RB))", a "subcarrier group (SCG)", a "resource element group (REG)", a "PRB pair", an "RB pair", and so on.

Furthermore, a resource block may be formed with one or more resource elements (REs). For example, one RE may be a radio resource field of one subcarrier and one symbol.

The bandwidth part (BWP) (which may be called partial bandwidth and the like) may represent a subset of consecutive common RB (common resource blocks) for a certain numerology in a certain carrier. Here, the common RB may be specified by the index of the RB based on a common reference point of the carrier. The PRB may be defined in a BWP and numbered within that BWP.

The BWP may include a BWP for UL (UL BWP) and a BWP for DL (DL BWP). For the UE, one or more BWPs may be configured within one carrier.

At least one of the configured BWPs may be active, and the UE does not need to assume to transmit or receive a given signal/channel outside the active BWP. Note that "cell", "carrier", and the like in the present disclosure may be replaced with "BWP".

Note that the configurations of radio frames, subframes, slots, minislots, symbols, and the like described above are merely examples. For example, configurations pertaining to the number of subframes included in a radio frame, the number of slots per subframe or radio frame, the number of minislots included in a slot, the number of symbols and RBs included in a slot or a minislot, the number of subcarriers included in an RB, the number of symbols in a TTI, the symbol duration, the length of cyclic prefixes (CPs) and so on can be variously changed.

Also, the information and parameters described in the present disclosure may be represented in absolute values or in relative values with respect to given values, or may be represented using other applicable information. For example, a radio resource may be specified by a given index.

The names used for parameters and so on in the present disclosure are in no respect limiting. In addition, an equation and so on using these parameters may differ from those explicitly disclosed in the present disclosure. Since various channels (PUCCH (Physical Uplink Control Channel), PDCCH (Physical Downlink Control Channel) and so on) and information elements can be identified by any suitable names, the various names assigned to these individual channels and information elements are in no respect limiting.

The information, signals, and the like described in the present disclosure may be represented by using a variety of different technologies. For example, data, instructions, commands, information, signals, bits, symbols, chips, and the like that may be referenced throughout the above description, may be represented by voltages, currents, electromagnetic waves, magnetic fields or particles, optical fields or photons, or any combination of these.

Also, information, signals, and the like can be output at least either from higher layers to lower layers, and from lower layers to higher layers. Information, signals, and the like may be input and output via a plurality of network nodes.

The information, signals, and so on that are input and/or output may be stored in a specific location (for example, memory), or may be managed in a control table. The information, signals and so on to be input and/or output can be overwritten, updated or appended. The information, signals and so on that are output may be deleted. The information, signals, and so on that are input may be transmitted to other apparatuses.

The reporting of information is by no means limited to the aspects/embodiments described in the present disclosure, and may be performed using other methods. For example, reporting of information may be implemented by using physical layer signaling (for example, downlink control information (DCI), uplink control information (UCI), higher layer signaling (for example, radio resource control (RRC) signaling, broadcast information (the master information block (MIB), system information block (SIB), and so on), medium access control (MAC) signaling, and so on), and other signals and/or combinations of these.

Note that physical layer signaling may be referred to as "L1/L2 (Layer 1/Layer 2) control information (L1/L2 control signals)", "L1 control information (L1 control signal)", or the like. Also, RRC signaling may be referred to as "RRC messages", and can be, for example, an RRC connection setup (RRCConnectionSetup) message, RRC connection reconfiguration (RRCConnectionReconfiguration) message, and so on. Further, MAC signaling may also be reported using, for example, MAC control elements (MAC CEs (Control Elements)).

Further, reporting of given information (for example, reporting of information to effect that "X holds") does not necessarily have to be sent explicitly, and can be sent implicitly (for example, by not reporting this given information, by reporting another information, or the like).

Decisions may be made in values represented by one bit (0 or 1), may be made in Boolean values that represent true or false, or may be made by comparing numerical values (for example, comparison against given value).

Software, whether referred to as "software", "firmware", "middleware", "microcode" or "hardware description language", or called by other names, should be interpreted broadly, to mean instructions, instruction sets, codes, code segments, program codes, programs, subprograms, software modules, applications, software applications, software packages, routines, subroutines, objects, executable files, execution threads, procedures, functions, and the like.

Also, software, commands, information, and the like may be transmitted and received via communication media. For example, when software is transmitted from a website, a server, or other remote sources by using at least one of wired technologies (coaxial cables, optical fiber cables, twisted-pair cables, digital subscriber lines (DSLs), and the like) and wireless technologies (infrared radiation, microwaves, and the like), at least one of these wired technologies and wireless technologies are also included in the definition of communication media.

The terms "system" and "network" as used in the present disclosure are used interchangeably.

In the present disclosure, the terms such as "precoding", "precoder", "weight (precoding weight)", "transmission power", "phase rotation", "antenna port", "layer", "layer number", "rank", "beam", "beam width", "beam angle", "antenna", "antenna element", and "panel" can be used interchangeably.

In the present disclosure, the terms such as "base station (BS)", "radio base station", "fixed station", "NodeB", "eNodeB (eNB)", "gNodeB (gNB)", "access point", "transmission point (TP)", "reception point (RP)", "transmission/reception point (TRP)", "panel", "cell", "sector", "cell group", "carrier", and "component carrier" may be used interchangeably. The base station may be called a term such as a macro cell, a small cell, a femto cell, a pico cell, and the like.

A base station can accommodate one or more (for example, three) cells. When a base station accommodates a plurality of cells, the entire coverage area of the base station can be partitioned into multiple smaller areas, and each smaller area can provide communication services through base station subsystems (for example, indoor small base stations (RRHs (Remote Radio Heads))). The term "cell" or "sector" refers to all or part of the coverage area of at least one of a base station and a base station subsystem that provides communication services within this coverage.

In the present disclosure, the terms "mobile station (MS)", "user terminal", "user equipment (UE)", "terminal", and the like may be used interchangeably.

A mobile station may be referred to as a subscriber station, mobile unit, subscriber unit, wireless unit, remote unit, mobile device, wireless device, wireless communication device, remote device, mobile subscriber station, access terminal, mobile terminal, wireless terminal, remote terminal, handset, user agent, mobile client, client, or some other suitable terms.

At least one of a base station and a mobile station may be referred to as transmitting apparatus, receiving apparatus, and so on. Note that at least one of the base station and the mobile station may be a device mounted on a mobile unit, a mobile unit itself, or the like. The moving body may be a transportation (for example, a car, an airplane and so on), an unmanned moving body (for example, a drone, an autonomous car, and so on), or a (manned or unmanned) robot. Note that at least one of the base station and the mobile station also includes a device that does not necessarily move during a communication operation.

Furthermore, the base stations in the present disclosure may be replaced with the user terminal. For example, each aspect/embodiment of the present disclosure may be applied to a structure in which communication between the base station and the user terminal is replaced with communication among a plurality of user terminals (which may be referred to as, for example, D2D (Device-to-Device), V2X (Vehicle-to-Everything) and so on). In this case, the user terminal 20 may be configured to have the functions of the base station 10 described above. In addition, the wording such as "up" and "down" may be replaced with the wording corresponding to the terminal-to-terminal communication (for example, "side"). For example, an uplink channel and a downlink channel may be replaced with a side channel.

Likewise, the user terminal in the present disclosure may be replaced with a base station. In this case, the base station 10 may be configured to have the functions of the user terminal 20 described above.

Certain actions that have been described in the present disclosure to be performed by base stations may, in some cases, be performed by their upper nodes. In a network including one or more network nodes with base stations, it is clear that various operations that are performed so as to communicate with terminals can be performed by base stations, one or more network nodes (for example, MMEs (Mobility Management Entities), S-GWs (Serving-Gateways) and so on may be possible, but these are not limiting) other than base stations, or combinations of these.

The aspects/embodiments illustrated in the present disclosure may be used individually or in combinations, which may be switched depending on the mode of implementation. The order of processes, sequences, flowcharts, and so on that have been used to describe the aspects/embodiments in the present disclosure may be reordered as long as inconsistencies do not arise. For example, regarding the methods described in the present disclosure, elements of various steps are presented using an illustrative order, and are not limited to the presented particular order.

The aspects/embodiments illustrated in the present disclosure may be applied to Long Term Evolution (LTE), LTE-Advanced (LTE-A), LTE-Beyond (LTE-B), SUPER 3G, IMT-Advanced, 4th generation mobile communication system (4G), 5th generation mobile communication system (5G), Future Radio Access (FRA), New Radio Access Technology (New-RAT), New Radio (NR), New radio access (NX), Future generation radio access (FX), Global System for Mobile communications (GSM; registered trademark), CDMA 2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), systems that use other adequate radio communication methods and/or next generation systems or the like that are enhanced based on these. Further, a plurality of systems may be combined and applied (for example, a combination of LTE or LTE-A and 5G, and the like).

The phrase "based on" as used in the present disclosure does not mean "based only on", unless otherwise specified. In other words, the phrase "based on" means both "based only on" and "based at least on".

Reference to elements with designations such as "first", "second", and so on as used in the present disclosure does not generally limit the number/quantity or order of these elements. These designations may be used in the present disclosure only for convenience, as a method for distinguishing between two or more elements. Thus, reference to the first and second elements does not imply that only two elements may be employed, or that the first element must precede the second element in some way.

The terms "judging (determining)" as used in the present disclosure may encompass a wide variety of actions. For example, "determining (or deciding)" may be regarded as "determination (decision)" of judging, calculating, computing, processing, deriving, investigating, looking up (for example, looking up in a table, database, or another data structure), ascertaining, or the like.

Furthermore, to "judge (determine)" as used herein may be interpreted to mean making judgements (determinations) related to receiving (for example, receiving information), transmitting (for example, transmitting information), inputting, outputting, accessing (for example, accessing data in a memory), and so on.

In addition, to "judge (determine)" as used herein may be interpreted to mean making judgements (determinations) related to resolving, selecting, choosing, establishing, comparing, and so on. In other words, to "judge (determine)" as used herein may be interpreted to mean making judgements and determinations related to some action.

In addition, to "judge (determine)" as used herein may be replaced with "assuming", "expecting", "considering", and so on.

The term "maximum transmit power" described in the present disclosure may mean the maximum value of transmit power, the nominal UE maximum transmit power, or the rated UE maximum transmit power.

As used in the present disclosure, the terms "connected" and "coupled", or any variation of these terms mean all direct or indirect connections or coupling between two or more elements, and may include the presence of one or more intermediate elements between two elements that are "connected" or "coupled" to each other. The coupling or connection between the elements may be physical, logical or a combination of these. For example, "connection" may be replaced with "access".

As used in the present disclosure, when two elements are connected, these elements may be considered "connected" or "coupled" to each other by using one or more electrical wires, cables, printed electrical connections, and the like, and, as a number of non-limiting and non-inclusive examples, by using electromagnetic energy having wavelengths in the radio frequency, microwave, and optical (both visible and invisible) regions, or the like.

In the present disclosure, the phrase "A and B are different" may mean "A and B are different from each other". Note that the term may mean that "A and B are different from C". The terms such as "leave" "coupled" and the like may be interpreted as "different".

When the terms such as "include", "including", and variations of these are used in the present disclosure, these terms are intended to be inclusive, in a manner similar to the way the term "comprising" is used. Furthermore, the term "or" as used in the present disclosure is intended to be not an exclusive-OR.

In the present disclosure, when articles, such as "a", "an", and "the" are added in English translation, the present disclosure may include the plural forms of nouns that follow these articles.

The description of the present disclosure is provided for the purpose of exemplification and explanation.

## Claims

1. A terminal (20) comprising:
a receiving section (203) adapted to receive a plurality of downlink channels corresponding to a plurality of uplink channels that overlap within a slot; and
a control section (401) adapted to determine a multiplexing of uplink control information within the plurality of uplink channels into a certain uplink channel, and thereafter, when there is another uplink control information to be transmitted on another uplink channel that overlaps in the slot with the certain uplink channel, the control section (401) performs a determination regarding an uplink channel for use in the slot for transmission of the another uplink control information.

2. The terminal (20) according to claim 1, wherein the control section (401) is adapted to determine a specific uplink resource for the multiplexing of the uplink control information within the plurality of uplink channels into the certain uplink channel, and to determine whether or not the specific uplink resource satisfies a timing condition, and
wherein the timing condition is based on a type of service.

3. A radio communication method for a terminal (20) comprising:
receiving a plurality of downlink channels corresponding to a plurality of uplink channels that overlap within a slot; and
determining a multiplexing of uplink control information within the plurality of uplink channels into a certain uplink channel, and thereafter, when there is another uplink control information to be transmitted on another uplink channel that overlaps in the slot with the certain uplink channel, performing a determination regarding an uplink channel for use in the slot for transmission of the another uplink control information.

4. A system (1) comprising the terminal (20) according to claim 1 or 2, and a base station (10), wherein the base station (10) comprises:
a transmitting section (103) adapted to transmit a plurality of downlink channels corresponding to a plurality of uplink channels that overlap within a slot.

## Patentansprüche

1. Ausrüstung (20), umfassend:
einen Empfangsabschnitt (203), der so angepasst ist, dass er eine Vielzahl von Abwärtsverbindungskanälen empfängt, die einer Vielzahl von Aufwärtsverbindungskanälen entsprechen, die sich innerhalb eines Schlitzes überlappen; und
einen Steuerabschnitt (401), der so angepasst ist, dass er ein Multiplexen von Aufwärtsverbindungssteuerinformationen innerhalb der Vielzahl von Aufwärtsverbindungskanälen in einen bestimmten Aufwärtsverbindungskanal bestimmt, und danach, wenn es andere Aufwärtsverbindungssteuerinformationen gibt, die auf einem anderen Aufwärtsverbindungskanal zu übertragen sind, der sich in dem Schlitz mit dem bestimmten Aufwärtsverbindungskanal überlappt, der Steuerabschnitt (401) eine Bestimmung bezüglich eines Aufwärtsverbindungskanals zur Verwendung in dem Schlitz zur Übertragung der anderen Aufwärtsverbindungssteuerinformationen durchführt.

2. Ausrüstung (20) nach Anspruch 1, wobei der Steuerabschnitt (401) so angepasst ist, dass er eine spezifische Aufwärtsverbindungsressource für das Multiplexen der Aufwärtsverbindungssteuerinformationen innerhalb der Vielzahl von Aufwärtsverbindungskanälen in den bestimmten Aufwärtsverbindungskanal bestimmt und bestimmt, ob die spezifische Aufwärtsverbindungsressource eine Zeitbedingung erfüllt oder nicht, und
wobei die Zeitbedingung auf einer Art von Dienst basiert.

3. Funkkommunikationsverfahren für eine Ausrüstung (20), umfassend:
Empfangen einer Vielzahl von Abwärtsverbindungskanälen, die einer Vielzahl von Aufwärtsverbindungskanälen entsprechen, die sich innerhalb eines Schlitzes überlappen; und
Bestimmen eines Multiplexens von Aufwärtsverbindungssteuerinformationen innerhalb der Vielzahl von Aufwärtsverbindungskanälen in einen bestimmten Aufwärtsverbindungskanal, und danach, wenn es andere Aufwärtsverbindungssteuerinformationen gibt, die auf einem anderen Aufwärtsverbindungskanal zu übertragen sind, der sich in dem Schlitz mit dem bestimmten Aufwärtsverbindungskanal überlappt,
Durchführen einer Bestimmung bezüglich eines Aufwärtsverbindungskanals zur Verwendung in dem Schlitz zur Übertragung der anderen Aufwärtsverbindungssteuerinformationen.

4. System (1), das die Ausrüstung (20) nach Anspruch 1 oder 2 umfasst, und eine Basisstation (10), wobei die Basisstation (10) umfasst:
einen Übertragungsabschnitt (103), der so angepasst ist, dass er eine Vielzahl von Abwärtsverbindungskanälen überträgt, die einer Vielzahl von Aufwärtsverbindungskanälen entsprechen, die sich innerhalb eines Schlitzes überlappen.

## Revendications

1. Terminal (20) comprenant :
une section de réception (203) adaptée pour recevoir une pluralité de canaux de liaison descendante correspondant à une pluralité de canaux de liaison montante qui se chevauchent dans un créneau ; et
une section de commande (401) adaptée pour déterminer un multiplexage d'informations de commande de liaison montante dans la pluralité de canaux de liaison montante dans un certain canal de liaison montante, et ensuite, lorsqu'il y a d'autres informations de commande de liaison montante à transmettre sur un autre canal de liaison montante qui se chevauche, dans le créneau, avec le certain canal de liaison montante, la section de commande (401) met en oeuvre une détermination concernant un canal de liaison montante pour utilisation dans le créneau pour transmission des autres informations de commande de liaison montante.

2. Terminal (20) selon la revendication 1, dans lequel la section de commande (401) est adaptée pour déterminer une ressource de liaison montante spécifique pour le multiplexage des informations de commande de liaison montante dans la pluralité de canaux de liaison montante dans le certain canal de liaison montante, et pour déterminer si la ressource de liaison montante spécifique satisfait ou non une condition de temporisation, et
dans lequel la condition de temporisation est basée sur un type de service.

3. Procédé de communication radio pour un terminal (20) comprenant :
la réception d'une pluralité de canaux de liaison descendante correspondant à une pluralité de canaux de liaison montante qui se chevauchent dans un créneau ; et
la détermination d'un multiplexage d'informations de commande de liaison montante dans la pluralité de canaux de liaison montante dans un certain canal de liaison montante, et ensuite, lorsqu'il y a d'autres informations de commande de liaison montante à transmettre sur un autre canal de liaison montante qui se chevauche, dans le créneau, avec le certain canal de liaison montante, la mise en oeuvre d'une détermination concernant un canal de liaison montante pour utilisation dans le créneau pour transmission des autres informations de commande de liaison montante.

4. Système (1) comprenant le terminal (20) selon la revendication 1 ou la revendication 2, et une station de base (10), dans lequel la station de base (10) comprend :
une section de transmission (103) adaptée pour transmettre une pluralité de canaux de liaison descendante correspondant à une pluralité de canaux de liaison montante qui se chevauchent dans un créneau.
